# EUROPEAN PATENT APPLICATION

(11) **EP 4 804 447 A1**
(43) Date of publication of application: **09.09.2026**
(21) Application number: 24884849.1
(22) Date of filing: 30.10.2024
(51) Int. Cl.: H04L 5/00

(54) **INFORMATION TRANSMISSION METHOD AND APPARATUS, TERMINAL, AND NETWORK SIDE DEVICE**

(30) Priority: 02.11.2023 CN 202311450284
(71) Applicant: Vivo Mobile Communication Co., Ltd., Dongguan, Guangdong 523863 (CN)
(72) Inventor: LI, Na, Dongguan, Guangdong 523863 (CN); WANG, Lihui, Dongguan, Guangdong 523863 (CN)
(74) Representative: Walaski, Jan Filip
(86) International application number: PCT/CN2024/128639
(87) International publication number: WO 2025/092849

(57) **Abstract**

The present application discloses an information transmission method, an information transmission apparatus, a terminal, and a network-side device, and pertains to the field of communication technologies. The information transmission method in the embodiments of the present application includes: transmitting, by a terminal, terminal capability information to a network-side device, where the terminal capability information is used to indicate whether the terminal supports simultaneous PUCCH and PUSCH transmissions of same priority on different cells under carrier aggregation.

## Description

### CROSS-REFERENCE TO RELATED APPLICATIONS

The present application claims priority to the Chinese patent application No. 202311450284.X, filed with the China National Intellectual Property Administration on November 2, 2023 and titled "INFORMATION TRANSMISSION METHOD AND APPARATUS, TERMINAL, AND NETWORK-SIDE DEVICE", which is incorporated herein by reference in its entirety.

### TECHNICAL FIELD

The present application belongs to the field of communication technologies, and specifically relates to an information transmission method, an information transmission apparatus, a terminal, and a network-side device.

### BACKGROUND

New Radio (New Radio, NR) supports multiplexing of physical uplink control channels (physical uplink control channel, PUCCH) having the same or different priorities, and multiplexing of a PUCCH or PUCCH with a physical uplink shared channel (Physical Uplink Shared Channel, PUSCH) having the same or different priorities, supports prioritization (prioritization) of PUCCHs having different priorities or of PUCCH and PUSCH having different priorities, and supports inter-band (inter-band) simultaneous PUCCH and PUSCH transmissions of different priorities on different serving cells, but there are some restrictions on the scheduling of PUCCH and PUSCH. Such scheduling restrictions may cause significant loss in system throughput during actual network deployment.

### SUMMARY

Embodiments of the present application provide an information transmission method, an information transmission apparatus, a terminal, and a network-side device, to alleviate the problem of system throughput loss caused by scheduling restrictions.

According to a first aspect, an information transmission method is provided, where the method includes:
transmitting, by a terminal, terminal capability information to a network-side device, where the terminal capability information is used to indicate whether the terminal supports simultaneous PUCCH and PUSCH transmissions of same priority on different cells under carrier aggregation.

According to a second aspect, an information transmission apparatus is provided, applied to a terminal, including:
a first transmitting module configured to transmit terminal capability information to a network-side device, where the terminal capability information is used to indicate whether the terminal supports simultaneous PUCCH and PUSCH transmissions of same priority on different cells under carrier aggregation.

According to a third aspect, an information transmission method is provided, where the method includes:
receiving, by a network-side device, terminal capability information transmitted by a terminal, where the terminal capability information is used to indicate whether the terminal supports physical uplink control channel PUCCH and physical uplink shared channel PUSCH transmissions of same priority on different cells under carrier aggregation.

According to a fourth aspect, an information transmission apparatus is provided, applied to a network-side device, including:
a first receiving module configured to receive terminal capability information transmitted by a terminal, where the terminal capability information is used to indicate whether the terminal supports physical uplink control channel PUCCH and physical uplink shared channel PUSCH transmissions of same priority on different cells under carrier aggregation.

According to a fifth aspect, a terminal is provided, including a processor and a memory, where the memory stores a program or an instruction executable by the processor, and when the program or instruction is executed by the processor, the steps of the method according to the first aspect are implemented.

According to a sixth aspect, a terminal is provided, including a processor and a communication interface, where the communication interface is configured to transmit terminal capability information to a network-side device, and the terminal capability information is used to indicate whether the terminal supports simultaneous PUCCH and PUSCH transmissions of same priority on different cells under carrier aggregation.

According to a seventh aspect, a network-side device is provided, including a processor and a memory, where the memory stores a program or an instruction executable by the processor, and when the program or instruction is executed by the processor, the steps of the method according to the third aspect are implemented.

According to an eighth aspect, a network-side device is provided, including a processor and a communication interface, where the communication interface is configured to receive terminal capability information transmitted by a terminal, and the terminal capability information is used to indicate whether the terminal supports physical uplink control channel PUCCH and physical uplink shared channel PUSCH transmissions of same priority on different cells under carrier aggregation.

According to a ninth aspect, a communication system is provided, including: a terminal and a network-side device, where the terminal is configured to perform the steps of the method according to the first aspect, and the network-side device is configured to perform the steps of the method according to the third aspect.

According to a tenth aspect, a readable storage medium is provided, where a program or an instruction is stored in the readable storage medium, and when the program or instruction is executed by a processor, the steps of the method according to the first aspect or the third aspect are implemented.

According to an eleventh aspect, a chip is provided, where the chip includes a processor and a communication interface, the communication interface is coupled to the processor, and the processor is configured to run a program or an instruction to implement the method according to the first aspect or third aspect.

According to a twelfth aspect, a computer program/program product is provided, where the computer program/program product is stored in a storage medium, and the computer program/program product is executed by at least one processor to implement the steps of the method according to the first aspect or the third aspect.

In the embodiments of the present application, the terminal capability information is indicated to the network-side device, so that the network-side device may know whether the terminal supports simultaneous PUCCH and PUSCH transmissions of same priority on different cells under carrier aggregation, and perform scheduling based on the indication from the terminal side, thereby avoiding, to the greatest extent possible, system throughput loss caused by scheduling restrictions.

### BRIEF DESCRIPTION OF DRAWINGS

FIG. 1 is a block diagram of a wireless communication system to which embodiments of the present application are applicable;
FIG. 2 is a first schematic flowchart of an information transmission method according to embodiments of the present application;
FIG. 3 is a schematic diagram of an existing scheduling restriction;
FIG. 4 is a first schematic diagram of transmission to which embodiments of the present application are applicable;
FIG. 5 is a second schematic diagram of transmission to which embodiments of the present application are applicable;
FIG. 6 is a third schematic diagram of transmission to which embodiments of the present application are applicable;
FIG. 7 is a second schematic flowchart of an information transmission method according to embodiments of the present application;
FIG. 8 is a first schematic modular diagram of an information transmission apparatus according to embodiments of the present application;
FIG. 9 is a schematic structural diagram of a terminal according to embodiments of the present application;
FIG. 10 is a second schematic modular diagram of an information transmission apparatus according to embodiments of the present application;
FIG. 11 is a schematic structural diagram of a network-side device according to embodiments of the present application; and
FIG. 12 is a schematic structural diagram of a communication device according to embodiments of the present application.

### DESCRIPTION OF EMBODIMENTS

The following clearly describes the technical solutions in the embodiments of the present application with reference to the accompanying drawings in the embodiments of the present application. Apparently, the described embodiments are some but not all of the embodiments of the present application. Based on the embodiments of the present application, all other embodiments obtained by persons of ordinary skill in the art shall fall within the protection scope of the present application.

The terms "first", "second" and the like in the present application are used to distinguish similar objects and are not used to describe a specific order or sequence. It should be understood that the terms used in such a way may be interchangeable in appropriate circumstances such that the embodiments of the present application may be implemented in other orders than the order illustrated or described herein. In addition, objects distinguished by "first" and "second" are generally of the same type, and the quantities of the objects are not limited, for example, there may be one or more first objects. In addition, "or" in the present application indicates at least one of the connected objects. For example, "A or B" covers three schemes: scheme one: including A but not B; scheme two: including B but not A; scheme three: including both A and B. The character "/" generally indicates an "or" relationship between the associated objects before and after the character.

The term "indication" in the present application may be a direct indication (or explicit indication) or an indirect indication (or implicit indication). The direct indication may be understood as the transmitter explicitly informing the receiver of specific information, operations to be performed, or request results in the transmitted indication; the indirect indication may be understood as the receiver determining corresponding information according to the indication transmitted by the transmitter, or performing judgment and determining operations to be performed or request results according to the judgment result.

It is worth pointing out that the technology described in the embodiments of the present application is not limited to the long term evolution (Long Term Evolution, LTE)/LTE-Advanced (LTE-Advanced, LTE-A) systems, but may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of the present application are often used interchangeably, and the technology described may be used in the systems and radio technologies mentioned above and other systems and radio technologies. In the following descriptions, a new radio (New Radio, NR) system is described for an illustration purpose, and NR terms are used in most of the following description, but these technologies may also be applied to systems other than NR systems, such as the 6th Generation (6th Generation, 6G) communication system.

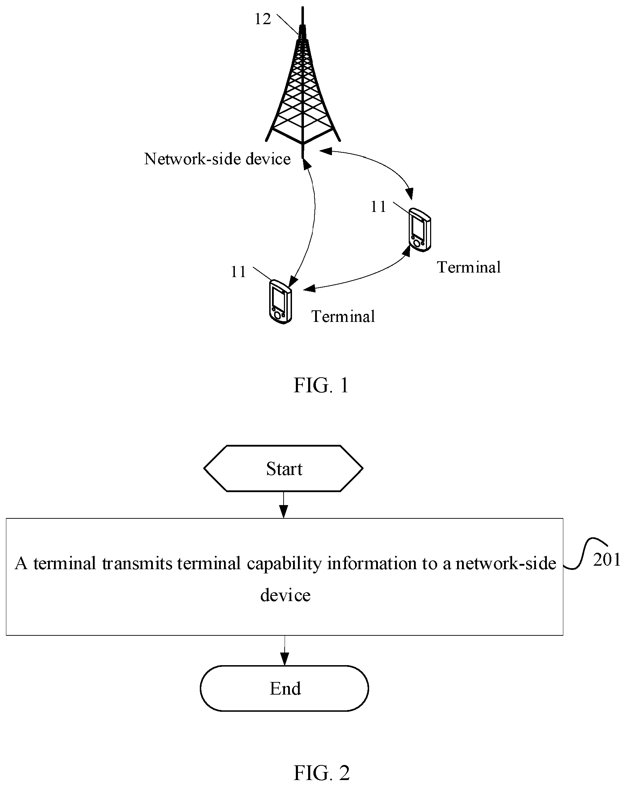

FIG. 1 is a block diagram of a wireless communication system to which embodiments of the present application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), a ship-borne device, pedestrian user equipment (Pedestrian User Equipment, PUE), a smart appliance (a household device with a wireless communication function, for example, a refrigerator, a television, a washing machine, or furniture), a game console, a personal computer (Personal Computer, PC), a teller machine, or a self-service machine. The wearable device includes a smart watch, a smart band, a smart earphone, smart glasses, smart jewelry (a smart bangle, a smart bracelet, a smart ring, a smart necklace, a smart anklet, a smart chain anklet, or the like), a smart wristband, smart clothing, or the like. The vehicle user equipment may also be called vehicle terminal, vehicle controller, vehicle module, vehicle component, vehicle chip, vehicle unit, or the like. It should be noted that the specific type of the terminal 11 is not limited in the embodiments of the present application. The network-side device 12 may include an access network device or a core network device, where the access network device may also be referred to as radio access network (Radio Access Network, RAN) device, radio access network function, or radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as Node B (Node B, NB), evolved Node B (Evolved Node B, eNB), next generation Node B (the next generation Node B, gNB), new radio Node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmission reception point (Transmission Reception Point, TRP), or some other suitable term in the field. As long as the same technical effect is achieved, the base station is not limited to specific technical vocabulary. It should be noted that in the embodiments of the present application, only the base station in the NR system is taken as an example for introduction, and the specific type of the base station is not limited.

The technologies related to the embodiments of the present application are first explained below.

Compared with previous mobile communication systems, a future 5G mobile communication system needs to adapt to more diversified scenarios and service requirements. The main scenarios of 5G include enhanced mobile broadband (Enhanced Mobile Broadband, eMBB), ultra-reliable low-latency communication (Ultra Reliable Low Latency Communication, URLLC), and massive machine type communication (Massive Machine Type Communication, mMTC). These scenarios impose requirements on a system such as high reliability, low latency, large bandwidth, and wide coverage. For some user equipment (User Equipment, UE), different services may be supported, for example, UEs support both URLLC and large-capacity and high-rate eMBB services. Due to different starting symbols and lengths of different channels in the New Radio (New Radio, NR) system, there may be time domain overlap of transmission resources. Usually, to maintain the single-carrier characteristic of uplink, when a plurality of overlapping physical uplink control channel (Physical Uplink Control Channel, PUCCH) transmissions occur within one slot, the single-carrier characteristic of the UE may be degraded, and different transmit powers may lead to deterioration of channel estimation performance. Such a situation is typically regarded as a conflict, and corresponding conflict solutions need to be designed, for example, by merging or discarding some information.

### 1.1 Multiplexing of PUCCHs or a PUCCH and a physical uplink shared channel (Physical Uplink Shared Channel, PUSCH) in a first case

Uplink control information (Uplink Control Information, UCI) is mainly transmitted on an uplink control channel (for example, a PUCCH). Uplink data is transmitted on an uplink data channel (for example, a PUSCH). Due to flexible configuration or indication of starting symbols and symbol lengths, and other causes, time overlap may occur between different PUCCHs or between a PUCCH and a PUSCH. In principle, a PUCCH and a PUSCH may be transmitted simultaneously, that is, UCI is retained on the PUCCH. However, this increases the cubic metric (Cubic Metric) of uplink transmission. In addition, to satisfy out-of-band emission requirements at higher transmit power, when the PUSCH and the PUCCH are transmitted simultaneously with a relatively large frequency domain separation (the PUCCH is generally transmitted at both ends of a frequency band), this poses challenges to radio frequency (RF) implementation. Therefore, in normal cases, when PUCCHs carrying UCI overlap in the time domain and multiplexing is to be performed between the PUCCHs, or when a PUCCH resource carrying UCI overlaps in the time domain with a PUSCH resource, and the base station ensures, when scheduling the PUCCH/PUSCH, that conditions for UCI multiplexing processing time are satisfied, the UCI is multiplexed onto one PUCCH, or the UCI and data are multiplexed onto a PUSCH, thereby avoiding simultaneous transmissions of different PUCCHs or simultaneous PUCCH and PUSCH transmissions.

At present, a timeline for multiplexing between PUCCHs or between a PUCCH and a PUSCH has been defined, that is, a predefined timeline (timeline) that needs to be satisfied for multiplexing between PUCCHs or for multiplexing UCI on PUSCH. If scheduling by the network side does not satisfy the timeline, it is considered as an error scheduling (error case).

In addition, considering the complexity of multiplexing and coding, NR imposes further restrictions on multiplexing between a PUCCH and a PUSCH. For example, when the subcarrier spacing of the PUSCH is smaller than that of the PUCCH (for example, 15 kHz for PUSCH, and 30 kHz for PUCCH), the terminal does not expect to multiplex UCI of a plurality of PUCCHs carrying the same type of UCI in different slots on one PUSCH.

### 1.1.1 Resolving order for multiplexing between PUCCHs or multiplexing UCI on a PUSCH

Within one PUCCH group (group), a plurality of PUCCHs may overlap, and one PUCCH may also overlap with a plurality of PUSCHs. To resolve the problem of time domain resource overlap among a plurality of uplink transmission channels, in one case, NR defines a resolving order for UE uplink multiplexing as follows:
(1). Within one time unit, if there are a plurality of PUCCHs, and at least two PUCCHs overlap, the UE first resolves overlap between PUCCHs, after which at most two non-overlapping PUCCHs are obtained;
(2). For a specific PUCCH output from (1), if the PUCCH does not overlap with any PUSCH, the UE transmits the PUCCH; if the PUCCH overlaps with one or more PUSCHs, the UE multiplexes the UCI (excluding the scheduling request (Scheduling Request, SR)) carried by the PUCCH onto one of the overlapping PUSCHs according to predefined rules. Specifically, if the PUCCH overlaps with only one PUSCH, the UCI (excluding SR) is multiplexed onto that PUSCH; if the PUCCH overlaps with a plurality of PUSCHs, the UE selects one PUSCH for multiplexing according to the following rules:
   (a) first priority: a PUSCH carrying aperiodic channel state information (A-CSI);
   (b) second priority: a PUSCH with the earliest starting slot (optional step, which may be omitted);
   (c) third priority: dynamically scheduled PUSCH > configured grant PUSCH or semi-persistent PUSCH (semiPersistentOnPUSCH);
   (d) fourth priority: a PUSCH associated with a serving cell having a smaller index > a PUSCH associated with a serving cell having a larger index; and
   (e) fifth priority: an earlier transmitted PUSCH > a later transmitted PUSCH.

### 1.2 Multiplexing and prioritization of uplink transmissions within a UE in a second case

To support different service requirements, in one case, NR introduces different physical layer priorities (specifically, represent ed by a priority index (priority index), where priority index=1 indicates high priority, and priority index=0 indicates low priority), and supports the following conflict scenarios, for which UE behaviors are defined.

High priority (High Priority, HP) uplink transmission vs. high priority uplink transmission: the UE handles it according to the first case.

Low priority (Low Priority, LP) uplink transmission vs. low priority uplink transmission: the UE handles it according to the first case.

High priority uplink transmission vs. low priority uplink transmission: the UE performs the high priority uplink transmission and cancels the low priority uplink transmission, and a cancellation timeline is defined as follows.

Similarly, to ensure that the UE has sufficient capability/time to cancel a low priority PUCCH/PUSCH transmission and transmit a high priority PUCCH/PUSCH, the base station is required to satisfy certain timeline requirements when scheduling the PUCCH/PUSCH. In the related art, timelines for prioritization between PUCCHs or between a PUCCH and a PUSCH are also defined.

### 1.2.1 Resolving order for prioritization between PUCCHs or between a PUCCH and a PUSCH

Within one PUCCH group, a plurality of PUCCHs may overlap, and one PUCCH may also overlap with a plurality of PUSCHs. In addition, PUCCHs/PUSCHs may be of low priority or high priority. In this case, to resolve the problem of time domain resource overlap among a plurality of uplink transmission channels, NR defines a resolving order for UE uplink conflict handling as follows:
(1) Within one time unit, if there are a plurality of LP PUCCH/PUSCH transmissions, the UE first resolves the overlap among low priority PUCCH/PUSCH transmissions according to the method in the first case;
(2) If an LP PUCCH/PUSCH after multiplexing overlaps with a high priority PUCCH/PUSCH, the UE cancels the overlapping LP PUCCH/PUSCH transmission;
(3) If there are a plurality of HP PUCCH/PUSCH transmissions, overlap among high priority PUCCH/PUSCH transmissions is first resolved according to the method in the first case; and
(4) If a channel output from (3) conflicts with the LP PUCCH/PUSCH output from (1), the UE cancels the conflicting LP PUCCH/PUSCH transmission.

### 1.3 Multiplexing between different priorities and simultaneous PUCCH and PUSCH transmissions in a third case

To reduce the impact on low priority uplink transmissions, especially low priority hybrid automatic repeat request acknowledgement (Hybrid automatic repeat request acknowledgement, HARQ-ACK), NR rel-17 supports inter-band (inter-band) simultaneous PUCCH and PUSCH transmissions of different priorities on different serving cells. It also supports multiplexing of PUCCHs or between a PUCCH and a PUSCH having different priorities.

### 1.3.1 Resolving order for multiplexing between PUCCHs or between PUCCH and PUSCH

Within one PUCCH group, a plurality of PUCCHs may overlap, and one PUCCH may also overlap with a plurality of PUSCHs. In addition, PUCCH/PUSCH transmissions may be of low priority or high priority. In this case, to resolve the problem of time domain resource overlap among a plurality of uplink transmission channels, NR defines a resolving order for UE uplink conflict handling as follows:
(1) Within one time unit, if a plurality of PUCCH/PUSCH transmissions overlap, the UE first resolves overlap among PUCCH/PUSCH transmissions of same priority according to the method in the first case;
(2) The UE resolves overlap between PUCCHs having different priorities, where for PUCCHs having different priorities, multiplexing between some types of PUCCHs is supported, for example, multiplexing of HARQ-ACK PUCCH having different priorities is supported, and multiplexing of HARQ-ACK PUCCH and CSI PUCCH having different priorities is not supported; and
(3) The UE resolves overlap between a PUCCH and a PUSCH having different priorities, where multiplexing is supported in some scenarios. For example, if a high priority positive SR PUCCH overlaps with a low priority PUSCH, the LP PUSCH transmission is dropped; if a HARQ-ACK PUCCH overlaps with a PUSCH having a different priority, the UE multiplexes the HARQ-ACK onto the PUSCH (except for certain scenarios, for example, when an LP HARQ-ACK PUCCH overlaps with an HP PUSCH and the HP PUSCH carries CSI part 2).

In the related art, schemes for supporting time-domain resource overlap between PUCCH and PUSCH include multiplexing, prioritization, and simultaneous transmission. However, there are still some limitations, such as those related to priority and the number of PUCCHs overlapping with a PUSCH. In practical network deployments, for example, in carrier aggregation (Carrier Aggregation, CA) scenarios, where a primary cell (Pcell) operates in time division duplex (Time Division Duplex, TDD) with a subcarrier spacing (Subcarrier Spacing, SCS) of 30 kHz, a secondary cell (Scell) operates in frequency division duplex (FDD) with an SCS of 15 kHz; PUCCH is transmitted on PCell, and PUSCH is transmitted on Scell, then it is not allowed to schedule two PUCCHs carrying HARQ-ACK feedback in different slots to overlap with one PUSCH. Such scheduling restrictions may cause significant system throughput loss. One solution is that a base station schedules the PUCCH and the PUSCH having different priorities and enables simultaneous PUCCH and PUSCH transmissions of different priorities. However, this requires the UE to support priority indication of PUCCH/PUSCH via DCI, that is, to couple different technical features. Nevertheless, the technical feature of indicating different priorities via DCI is not an urgent issue in practical deployment. Another more practical solution is to support simultaneous PUCCH and PUSCH transmissions of same priority. However, when simultaneous PUCCH and PUSCH transmissions of same priority is supported, processing of uplink channel overlap, as well as interoperability with other features, such as multiplexing or simultaneous transmission between a PUCCH and a PUSCH having different priorities, needs to be considered.

The information transmission method, information transmission apparatus, terminal, and network-side device provided in the embodiments of the present application are described in detail below with reference to the accompanying drawings through some embodiments and their application scenarios.

As shown in FIG. 2, embodiments of the present application provide an information transmission method, including:
Step 201: A terminal transmits terminal capability information to a network-side device, where the terminal capability information is used to indicate whether the terminal supports simultaneous physical uplink control channel (PUCCH) and physical uplink shared channel (PUSCH) transmissions of same priority on different cells under carrier aggregation.

It should be noted that the terminal capability information is indicated to the network-side device, so that the network-side device may determine whether the terminal supports simultaneous PUCCH and PUSCH transmissions of same priority on different cells under carrier aggregation, and perform scheduling based on the indication from the terminal side, thereby avoiding, to the greatest extent possible, system throughput loss caused by scheduling restrictions.

Optionally, the terminal supporting simultaneous PUCCH and PUSCH transmissions of same priority on different cells under carrier aggregation may include at least one of the following:
supporting simultaneous PUCCH and PUSCH transmissions of same priority on different cells under inter-band (inter-band) carrier aggregation; and
supporting simultaneous PUCCH and PUSCH transmissions of same priority on different cells under intra-band (intra-band) carrier aggregation.

Optionally, in one implementation, the PUCCH carries hybrid automatic repeat request acknowledgement (HARQ-ACK) information.

This case may be understood as follows: the capability of supporting simultaneous PUCCH and PUSCH transmissions of same priority on different cells under carrier aggregation is limited to HARQ-ACK transmission. That is, a PUCCH capable of being transmitted simultaneously with a PUSCH is a PUCCH carrying HARQ-ACK information. If a PUCCH overlapping with a PUSCH does not carry HARQ-ACK information (for example, a PUCCH only carries channel state information (CSI) or scheduling request (SR)), simultaneous PUCCH and PUSCH transmissions of same priority on different cells under carrier aggregation is not supported.

Optionally, in one implementation, the terminal supports simultaneous PUCCH and PUSCH transmissions of different priorities on different cells under carrier aggregation.

Optionally, this case may be understood as follows: as a prerequisite, the capability of supporting simultaneous PUCCH and PUSCH transmissions of same priority on different cells under inter-band carrier aggregation requires that the terminal supports simultaneous PUCCH and PUSCH transmissions of different priorities on different cells under inter-band carrier aggregation. That is, the terminal supporting simultaneous PUCCH and PUSCH transmissions of same priority on different cells under inter-band carrier aggregation necessarily supports simultaneous PUCCH and PUSCH transmissions of different priorities on different cells under inter-band carrier aggregation;

Optionally, this case may be understood as follows: if the terminal having the capability of supporting simultaneous PUCCH and PUSCH transmissions of same priority on different cells under intra-band carrier aggregation supports scheduling of PUCCH/PUSCH having different priorities, the terminal also supports simultaneous PUCCH and PUSCH transmissions of different priorities on different cells under intra-band carrier aggregation.

Optionally, in one implementation, the method further includes:
receiving, by the terminal, a first configuration parameter transmitted by the network-side device; where
the first configuration parameter is used to enable the terminal to perform simultaneous PUCCH and PUSCH transmissions of same priority on different cells under carrier aggregation.

Optionally, the first configuration parameter satisfies at least one of the following:
the first configuration parameter is used to enable the terminal to perform simultaneous PUCCH and PUSCH transmissions of same priority on different cells under inter-band carrier aggregation; and
the first configuration parameter is used to enable the terminal to perform simultaneous PUCCH and PUSCH transmissions of same priority on different cells under intra-band carrier aggregation.

This implementation may be understood as whether the terminal uses simultaneous PUCCH and PUSCH transmissions of same priority on different cells under carrier aggregation to determine how to perform uplink transmission needs to be enabled by the network-side device. Optionally, the first configuration parameter may be configured through higher layer signaling. Optionally, the first configuration parameter may be configured through radio resource control (Radio Resource Control, RRC) parameters.

For example, the terminal transmits terminal capability information to the network-side device, where the terminal capability information is used to indicate whether the terminal supports simultaneous PUCCH and PUSCH transmissions of same priority on different cells under inter-band carrier aggregation. When determining to enable simultaneous PUCCH and PUSCH transmissions of same priority on different cells under inter-band carrier aggregation, the network-side device needs to transmit a first configuration parameter to the terminal, where the first configuration parameter is used to enable the terminal to perform simultaneous PUCCH and PUSCH transmissions of same priority on different cells under inter-band carrier aggregation.

It should be noted that in a case that the terminal is enabled for simultaneous PUCCH and PUSCH transmissions of same priority on different cells under carrier aggregation, the terminal may perform overlap resolving by using at least one of the following methods.

### Method 1

Optionally, in one implementation, the method further includes:
in a case that a first PUCCH overlaps with at least one PUSCH, multiplexing, by the terminal, the first PUCCH with one or more PUSCHs in the at least one PUSCH; where
the first PUCCH and the at least one PUSCH have the same priority; and the at least one PUSCH is not capable of being transmitted simultaneously with the first PUCCH.

It should be noted that the at least one PUSCH is not capable of being transmitted simultaneously with the first PUCCH, which may be understood as the at least one PUSCH and the first PUCCH not satisfying the requirements of being located on different serving cells across bands. For example, if the cell on which the first PUCCH is located and the cell on which the at least one PUSCH is located are within the same band (band), the at least one PUSCH and the first PUCCH do not satisfy the requirements of being located on different serving cells across bands; or,
the at least one PUSCH is not capable of being transmitted simultaneously with the first PUCCH, which may be understood as the at least one PUSCH and the first PUCCH not satisfying the requirements of being located on different serving cells within the same band. For example, if the first PUCCH and the at least one PUSCH are located on the same serving cell, the at least one PUSCH and the first PUCCH do not satisfy the requirements of being located on different serving cells within the same band.

It should be noted that the overlap of the first PUCCH with the at least one PUSCH may be understood as the time domain overlap between the first PUCCH and the at least one PUSCH. For example, a time domain of the first PUCCH partially or fully overlaps with a time domain of the at least one PUSCH.

This case may be understood as follows: if a certain PUCCH overlaps with one or more PUSCHs, and one or more PUSCHs overlapping with the PUCCH are not capable of being transmitted simultaneously with the PUCCH, the terminal multiplexes the PUCCH for transmission. Specifically, the PUCCH may be multiplexed onto one PUSCH among the one or more PUSCHs, or the PUCCH may be multiplexed onto a plurality of PUSCHs among the one or more PUSCHs. How the terminal determines a PUSCH onto which UCI is multiplexed may be implemented according to the related art and is not limited in the present application.

For example, if PUCCH1 overlaps with PUSCH1 and PUSCH2, PUCCH1, PUSCH1, and PUSCH2 have the same priority, and both PUSCH1 and PUSCH2 are not capable of being transmitted simultaneously with PUCCH1, the terminal multiplexes PUCCH1 onto PUSCH1 for transmission, or the terminal multiplexes PUCCH1 onto PUSCH2 for transmission, or the terminal multiplexes PUCCH1 onto both PUSCH1 and PUSCH2 for transmission.

### Method 2

Optionally, in one implementation, the method further includes:
in a case that a second PUCCH overlaps with a plurality of PUSCHs, multiplexing, by the terminal, the second PUCCH with at least one PUSCH in a target PUSCH; where
the second PUCCH and the plurality of PUSCHs have the same priority; and the target PUSCH is a PUSCH in the plurality of PUSCHs that does not support simultaneous transmission with the second PUCCH, or the target PUSCH is a PUSCH in the plurality of PUSCHs excluding the PUSCH capable of being transmitted simultaneously with the second PUCCH.

This case may be understood as follows: if a certain PUCCH overlaps with one or more PUSCHs, and among the one or more PUSCHs overlapping with the PUCCH, some PUSCHs are not capable of being transmitted simultaneously with the PUCCH, and some PUSCHs are capable of being transmitted simultaneously with the PUCCH, the terminal needs to multiplex the PUCCH onto the PUSCH capable of being transmitted simultaneously with the PUCCH.

For example, if PUCCH1 overlaps with PUSCH1, PUSCH2, and PUSCH3, PUCCH1, PUSCH1, PUSCH2, and PUSCH3 have the same priority, PUSCH1 is not capable of being transmitted simultaneously with PUCCH1, and both PUSCH2 and PUSCH3 are capable of being transmitted simultaneously with PUCCH1, the terminal multiplexes PUCCH1 onto PUSCH2 for transmission, or the terminal multiplexes PUCCH1 onto PUSCH3 for transmission, or the terminal multiplexes PUCCH1 onto both PUSCH2 and PUSCH3 for transmission.

### Method 3

Optionally, in one implementation, the method further includes:
in a case that a third PUCCH overlaps with a first PUSCH, transmitting, by the terminal, the third PUCCH and the first PUSCH separately; where
the third PUCCH and the first PUSCH have the same priority; and the first PUSCH is capable of being transmitted simultaneously with the third PUCCH.

It should be noted that the first PUSCH is capable of being transmitted simultaneously with the third PUCCH, which may be understood as the first PUSCH and the third PUCCH satisfying the requirements of being located on different serving cells across bands. For example, if the first PUSCH and the third PUCCH are located on different serving cells of different bands, the first PUSCH and the third PUCCH satisfy the requirements of being located on different serving cells across bands; or
the first PUSCH is capable of being transmitted simultaneously with the third PUCCH, which may be understood as the first PUSCH and the third PUCCH satisfying the requirements of being located on different serving cells within the same band, for example, if the first PUSCH and the third PUCCH are located on different serving cells of the same band, the first PUSCH and the third PUCCH satisfy the requirements of being located on different serving cells within the same band.

It should be noted that the first PUSCH mentioned in the embodiments of the present application may be one or more PUSCHs.

This case may be understood as follows: if a certain PUCCH overlaps with one or more PUSCHs, and the one or more PUSCHs overlapping with the PUCCH are all capable of being transmitted simultaneously with the PUCCH, the terminal may transmit the overlapping PUCCH and PUSCH at their respective positions, that is, the terminal may transmit the overlapping PUCCH and PUSCH simultaneously. Optionally, such simultaneous transmission here may be understood as transmitting the PUCCH and the PUSCH separately at their respective resource positions.

### Method 4

Optionally, in one implementation, the method further includes:
in a case that a fourth PUCCH overlaps with a fifth PUCCH, multiplexing, by the terminal, the fourth PUCCH and the fifth PUCCH to obtain a sixth PUCCH, where the fourth PUCCH and the fifth PUCCH have different priorities; and
in a case that the sixth PUCCH overlaps with a second PUSCH, transmitting, by the terminal, the sixth PUCCH and the second PUSCH separately, where the sixth PUCCH and the second PUSCH have the same priority; and the second PUSCH is capable of being transmitted simultaneously with the sixth PUCCH.

It should be noted that the second PUSCH is capable of being transmitted simultaneously with the sixth PUCCH, which may be understood as the second PUSCH and the sixth PUCCH satisfying the requirements of being located on different serving cells across bands. For example, if the second PUSCH and the sixth PUCCH are located on different serving cells of different bands, the second PUSCH and the sixth PUCCH satisfy the requirements of being located on different serving cells across bands; or
the second PUSCH is capable of being transmitted simultaneously with the sixth PUCCH, which may be understood as the second PUSCH and the sixth PUCCH satisfying the requirements of being located on different serving cells within the same band. For example, if the second PUSCH and the sixth PUCCH are located on different serving cells of the same band, the second PUSCH and the sixth PUCCH satisfy the requirements of being located on different serving cells within the same band.

It should be noted that the second PUSCH mentioned in the embodiments of the present application may be one or more PUSCHs.

This case may be understood as follows: if a plurality of PUCCHs having different priorities overlap, these PUCCHs may be multiplexed first to obtain a multiplexed PUCCH. The multiplexed PUCCH has a specific priority, for example, the multiplexed PUCCH is of high priority. If the multiplexed PUCCH overlaps with one or more PUSCHs having the same priority, and the multiplexed PUCCH is capable of being transmitted simultaneously with one or more PUSCHs having the same priority, the terminal transmits the multiplexed PUCCH and these PUSCHs separately.

It should also be noted here that multiplexing between PUCCHs having different priorities needs to be enabled by the network-side device, that is, the network-side device transmits higher layer signaling or RRC signaling to enable multiplexing between PUCCHs having different priorities. If the network-side device does not enable multiplexing between PUCCHs having different priorities, the terminal does not multiplex PUCCHs having different priorities.

### Method 5

Optionally, in one implementation, the method further includes:
in a case that a seventh PUCCH overlaps with a third PUSCH, transmitting, by the terminal, the seventh PUCCH and the third PUSCH separately; where
the seventh PUCCH and the third PUSCH have different priorities; and the third PUSCH is capable of being transmitted simultaneously with the seventh PUCCH.

It should be noted that the third PUSCH is capable of being transmitted simultaneously with the seventh PUCCH, which may be understood as the third PUSCH and the seventh PUCCH satisfying the requirements of being located on different serving cells across bands. For example, if the third PUSCH and the seventh PUCCH are located on different serving cells of different bands, the third PUSCH and the seventh PUCCH satisfy the requirements of being located on different serving cells across bands; or
the third PUSCH is capable of being transmitted simultaneously with the seventh PUCCH, which may be understood as the third PUSCH and the seventh PUCCH satisfying the requirements of being located on different serving cells within the same band. For example, if the third PUSCH and the seventh PUCCH are located on different serving cells of the same band, the third PUSCH and the seventh PUCCH satisfy the requirements of being located on different serving cells within the same band.

It should be noted that the third PUSCH mentioned in the embodiments of the present application may be one or more PUSCHs.

This case may be understood as follows: if a certain PUCCH overlaps with one or more PUSCHs, the PUCCH has a different priority from the one or more PUSCHs, and the one or more PUSCHs overlapping with the PUCCH are all capable of being transmitted simultaneously with the PUCCH, the terminal may transmit the overlapping PUCCH and PUSCHs at their respective positions.

It should be noted that the implementation of this case requires that simultaneous PUCCH and PUSCH transmissions of different priorities on different cells under inter-band carrier aggregation is also enabled. Optionally, in one case, when the terminal receives the first configuration parameter, the terminal defaults that simultaneous PUCCH and PUSCH transmissions of different priorities on different cells under inter-band carrier aggregation is also enabled; or, optionally, in another case, the enabling of simultaneous PUCCH and PUSCH transmissions of different priorities on different cells under inter-band carrier aggregation is also configured by the network-side device. Optionally, in one implementation, the method further includes:
receiving, by the terminal, a second configuration parameter transmitted by the network-side device; where
the second configuration parameter is used to enable the terminal to perform simultaneous PUCCH and PUSCH transmissions of different priorities on different cells under carrier aggregation.

Optionally, the second configuration parameter satisfies at least one of the following:
the second configuration parameter is used to enable the terminal to perform simultaneous PUCCH and PUSCH transmissions of different priorities on different cells under inter-band carrier aggregation; and
the second configuration parameter is used to enable the terminal to perform simultaneous PUCCH and PUSCH transmissions of different priorities on different cells under intra-band carrier aggregation.

That is, in this case, the network-side device not only needs to transmit the first configuration parameter to enable simultaneous PUCCH and PUSCH transmissions of different priorities on different cells under carrier aggregation, but also needs to transmit the second configuration parameter to enable simultaneous PUCCH and PUSCH transmissions of different priorities on different cells under carrier aggregation. For example, if the terminal is enabled for simultaneous PUCCH and PUSCH transmissions of same priority on different cells under inter-band carrier aggregation, and if the terminal is also configured or indicated with a PUCCH/PUSCH having different priorities, the terminal expects the network-side device to transmit the second configuration parameter to enable simultaneous PUCCH and PUSCH transmissions of different priorities on different cells under inter-band carrier aggregation.

Optionally, in a case that the terminal is enabled for simultaneous PUCCH and PUSCH transmissions of same priority on different cells under carrier aggregation, in one implementation, the method further includes at least one of the following:
A11: resolving, by the terminal, overlap between PUCCHs having the same priority;
A12: resolving, by the terminal, overlap between a PUCCH and a PUSCH having the same priority;
A13: resolving, by the terminal, overlap between PUCCHs having different priorities; and
A14: resolving, by the terminal, overlap between a PUCCH and a PUSCH having different priorities.

It should be noted that the above several implementations may be used in any combination in specific use. If there simultaneously exist overlap among a plurality of PUCCHs having different priorities, overlap between a PUCCH and a PUSCH having different priorities, overlap between a plurality of PUCCHs having the same priority, and overlap between a PUCCH and a PUSCH having the same priority, the terminal first resolves the overlap among a plurality of PUCCHs having the same priority, then resolves the overlap between the PUCCH and the PUSCH having the same priority, subsequently resolves the overlap between the plurality of PUCCHs having different priorities, and finally resolves the overlap between the PUCCH and the PUSCH having different priorities. That is, the resolving order of the terminal in this case is as follows:
Step 1: resolving overlap between PUCCHs having the same priority;
Step 2: resolving overlap between a PUCCH and a PUSCH having the same priority;
Step 3: resolving overlap between PUCCHs having different priorities; and
Step 4: resolving overlap between a PUCCH and a PUSCH having different priorities, or resolving overlap between a PUCCH and a PUSCH having the same priority and overlap between a PUCCH and a PUSCH having different priorities.

It should be noted that when the multiplexed PUCCH obtained by resolving overlap between PUCCHs having different priorities in step 3 overlaps with a PUSCH having the same priority, the terminal resolves the overlap between a PUCCH and a PUSCH having the same priority in step 4; if the multiplexed PUCCH obtained by resolving overlap between PUCCHs having different priorities in step 3 does not overlap with a PUSCH having the same priority, the terminal only resolves overlap between a PUCCH and a PUSCH having different priorities in step 4.

It should be noted here that the specific implementation of the above A12 may adopt one or more of the above Method 1, Method 2, and Method 3. The specific implementation of the above A13 may adopt the above Method 4; and the specific implementation of the above A14 may adopt the above Method 5.

It should be particularly noted that, if multiplexing of PUCCH is required in the process of resolving overlap between PUCCHs having different priorities, a resulting multiplexed PUCCH is only allowed to overlap with a PUSCH having the same priority that supports simultaneous transmission with PUCCH. In this case, the terminal only needs to transmit the multiplexed PUCCH and the PUSCH separately.

The following describes example application cases of the embodiments of the present application by taking, as an example, a case in which the terminal supports simultaneous PUCCH and PUSCH transmissions of same priority on different cells under carrier aggregation.

The deployment scenario to which the present application is applicable is an uplink carrier aggregation (UL CA) scenario. For example, the terminal is deployed with UL CA, and a subcarrier spacing (Subcarrier Spacing, SCS) of a cell on which the PUCCH is located (it should be noted that the cell on which the PUCCH is located may be a primary cell (PCell), or, when the terminal is configured with PUCCH cell switching, may alternatively be a SCell, such as a PUCCH switching SCell or PUCCH-sSCell, or may further refer to a cell on which the PUCCH may be located) is greater than an SCS of a cell on which the PUSCH is located. For example, the terminal is configured with UL CA, where the PCell operates in a time division duplex (Time Division Duplex, TDD) band with an SCS of 30 kHz, and the SCell operates in a frequency division duplex (Frequency Division Duplex, FDD) band with a configured SCS of 15 kHz.

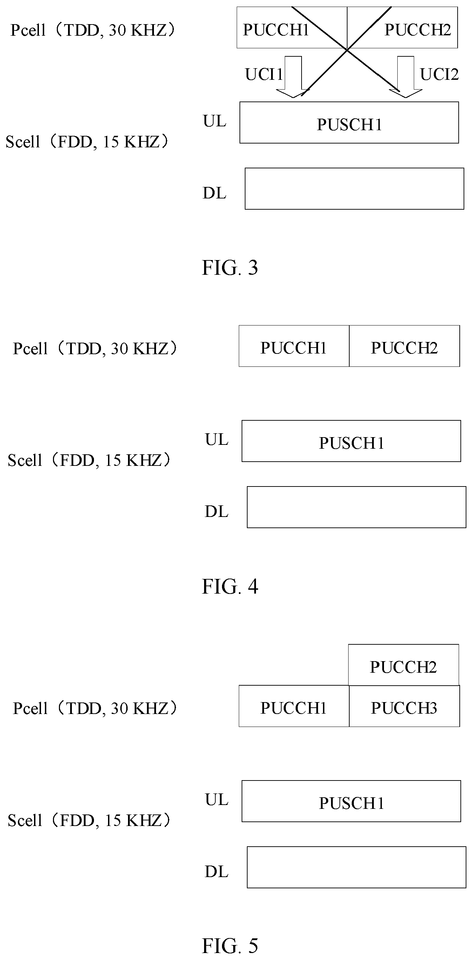

The existing scheduling restriction is as follows: as shown in FIG. 3, if a base station schedules a PUSCH in one slot (slot) on a secondary cell (Scell), and time-domain resources of the PUSCH overlap with two slots of a PCell, the base station is not allowed to schedule two PUCCHs in the two slots respectively for carrying HARQ-ACK feedback information, the two PUCCHs both overlap with the PUSCH, and the terminal would multiplex the HARQ-ACK information on the two PUCCHs onto the PUSCH according to corresponding protocol rules. For example, the two PUCCHs have the same priority as the PUSCH, or the two PUCCHs have the same priority and the priority of the PUCCHs is different from that of the PUSCH and the terminal is enabled for multiplexing between different priorities (for example, the terminal is configured with uci-MuxWithDiffPrio). However, such a scheduling restriction may cause significant loss in system throughput.

To address the above scheduling restriction, one solution is to support inter-band (inter-band) simultaneous PUCCH and PUSCH transmissions of same priority on different serving cells, which may be based on terminal capability, for example, by introducing terminal capability information (for example, parallelTxPUCCH-PUSCH-samePrio), where the terminal capability information is used to indicate whether the terminal supports simultaneous PUCCH and PUSCH transmissions of same priority on different cells under inter-band carrier aggregation.

Optionally, this capability may be limited to HARQ-ACK transmission, that is, a PUCCH capable of being transmitted simultaneously with PUSCH carries HARQ-ACK information. If a PUCCH overlapping with the PUSCH does not carry HARQ-ACK information (for example, the PUCCH only carries CSI or SR), simultaneous PUCCH and PUSCH transmissions of same priority on different cells under inter-band carrier aggregation is not supported.

Optionally, this capability is based on a premise of supporting simultaneous PUCCH and PUSCH transmissions of different priorities on different cells under inter-band carrier aggregation, that is, the terminal supporting this capability, if also supporting PUCCH/PUSCH transmissions of different priorities, necessarily supports simultaneous PUCCH and PUSCH transmissions of different priorities on different cells under inter-band carrier aggregation.

When the terminal indicates to the base station whether the terminal supports this capability, the base station may enable the terminal to perform simultaneous PUCCH and PUSCH transmissions of different priorities on different cells under inter-band carrier aggregation, for example, by configuration or indication via higher layer signaling, such as RRC parameter configuration (for example, via simultaneousPUCCH-PUSCHWithSamePrio). When the terminal is enabled for simultaneous PUCCH and PUSCH transmissions of same priority on different cells under inter-band carrier aggregation (for example, parameter simultaneousPUCCH-PUSCHWithSamePrio is configured), the base station is not required to satisfy the above scheduling restrictions when scheduling PUCCH/PUSCH. That is, if the base station schedules a PUSCH in one slot on a Scell, and time domain resources of the PUSCH overlap with two slots of PCell, the base station is allowed to schedule two PUCCHs in the two slots respectively for carrying HARQ-ACK feedback information, where the two PUCCHs both overlap with the PUSCH and has the same priority as the PUSCH.

Under the above solution, a method for the terminal to resolve overlap between a PUCCH and a PUSCH is as follows: when the terminal is enabled for simultaneous PUCCH and PUSCH transmissions of same priority on different cells under inter-band carrier aggregation, if the base station schedules a PUSCH in one slot on a Scell, and time domain resources of the PUSCH overlap with two slots of a PCell, the base station schedules/configures a plurality of PUCCHs in the two slots for carrying the same type of UCI (such as HARQ-ACK feedback information), where the plurality of PUCCHs all overlap with the PUSCH.

For example, the terminal resolves in the following order:
Step 1: the terminal resolves overlap between channels having the same priority;
Step 1-1: the terminal resolves overlap between PUCCHs having the same priority;
Step 1-2: the terminal resolves overlap between a PUCCH and a PUSCH having the same priority.
Step 2: the terminal resolves overlap between channels having different priorities;
Step 2-1: the terminal resolves overlap between PUCCHs having different priorities; and
Step 2-2: the terminal resolves overlap between a PUCCH and a PUSCH having different priorities;

For step 1-2, if the terminal is enabled for simultaneous PUCCH and PUSCH transmissions of same priority on different cells under inter-band carrier aggregation, when the terminal resolves overlap between a PUCCH and a PUSCH having the same priority, and multiplexes UCI onto the PUSCH having the same priority, the terminal excludes a PUSCH that supports simultaneous transmission with the PUCCH (UCI is multiplexed onto the PUSCH that does not support simultaneous transmission with PUCCH, if any).

For step 2-1, if the terminal is enabled for multiplexing between a PUCCH and a PUSCH having different priorities, some PUCCHs having different priorities may be multiplexed, for example, HARQ-ACK PUCCHs having different priorities.

For 2-2, if the terminal is enabled for multiplexing between a PUCCH and a having different priorities and simultaneous PUCCH and PUSCH transmissions of same priority on different cells under inter-band carrier aggregation, when the terminal resolves overlap between the PUCCH and the PUSCH having different priorities, and multiplexes UCI onto a PUSCH having different priorities, the terminal excludes a PUSCH that supports simultaneous transmission with the PUCCH (UCI is multiplexed onto a PUSCH that does not support simultaneous transmission, if any).

It should be noted that all the following application cases are based on a premise that the terminal is enabled for simultaneous PUCCH and PUSCH transmissions of same priority on different cells under inter-band carrier aggregation, where a larger priority index indicates a higher priority.

Application case 1: One PUSCH overlaps, in time-domain resources, with two PUCCHs carrying the same type of UCI (such as HARQ-ACK) in different slots, as shown in FIG. 4 and Table 1.

**Table 1 Transmission positions and priority mapping of PUCCH and PUSCH in Application case 1**

| | | |
|---|---|---|
| PCell (TDD, 30 kHz) | PUCCH#1 | PUCCH#2 |
| | p=0 or p=1 | p=0 or p=1 |
| SCell #2 (FDD, 15 kHz) | PUSCH#1 | |
| | p=0 or p=1 | |

Case 1-1: All PUCCHs have the same priority, and the priorities of all PUCCHs are the same as that of the PUSCH. In this case, the terminal transmits PUCCH#1, PUCCH#2, and PUSCH#1 simultaneously and separately at their respective resource positions.

For example, priority indexes of all PUCCHs and PUSCH are all 0 or all 1.

Case 1-2: PUCCH#1 and PUCCH#2 have different priorities, specifically including at least one of the following situations.

Case 1-2-1: The priority index of PUCCH#1 is 0, the priority index of PUCCH#2 is 1, and the priority index of PUSCH#1 is 0

In this case, it specifically includes one of the following situations.
1. If the terminal is neither enabled for simultaneous PUCCH and PUSCH transmissions of different priorities on different cells under inter-band carrier aggregation, nor enabled for multiplexing between different priorities (including multiplexing between PUCCHs having different priorities or between a PUCCH and a PUSCH having different priorities, for example, the terminal is not configured with uci-MuxWithDiffPrio), the terminal drops PUSCH#1 and transmits PUCCH#1 and PUCCH#2 separately.
   Optionally, the terminal does not expect this scenario to occur.
2. If the terminal is also enabled for simultaneous PUCCH and PUSCH transmissions of different priorities on different cells under inter-band carrier aggregation, the terminal transmits PUCCH#1, PUCCH#2, and PUSCH#1 simultaneously and separately; where
   optionally, when the terminal is enabled for simultaneous PUCCH and PUSCH transmissions of same priority on different cells under inter-band carrier aggregation, it indicates that the terminal is also enabled for simultaneous PUCCH and PUSCH transmissions of different priorities on different cells under inter-band carrier aggregation (if the terminal is scheduled/configured with PUCCH and PUSCH having different priorities, or the terminal supports transmission of PUCCH and/or PUSCH having different priorities)
   It should be noted that when the terminal supports simultaneous PUCCH and PUSCH transmissions of same priority on different cells under inter-band carrier aggregation, if the UE is scheduled with PUCCH and PUSCH transmissions of different priorities, the terminal defaults to being enabled for simultaneous PUCCH and PUSCH transmissions of different priorities on different cells under inter-band carrier aggregation; or, when the terminal supports simultaneous PUCCH and PUSCH transmissions of same priority on different cells under inter-band carrier aggregation, if the terminal is configured or scheduled with PUCCH and PUSCH transmissions of different priorities, the base station is required to enable the terminal to perform simultaneous PUCCH and PUSCH transmissions of different priorities on different cells under inter-band carrier aggregation.
3. If the terminal is enabled for multiplexing between different priorities (including multiplexing between a PUCCH and a PUSCH having different priorities), for example, the terminal is configured with uci-MuxWithDiffPrio and is not enabled for simultaneous PUCCH and PUSCH transmissions of different priorities on different cells under inter-band carrier aggregation, the terminal multiplexes the UCI on PUCCH#2 onto PUSCH#1 for transmission, and cancels the transmission of PUCCH#1.
   Optionally, the terminal does not expect this scenario to occur.
4. If the terminal is also enabled for multiplexing between different priorities (including multiplexing between a PUCCH and a PUSCH having different priorities) and simultaneous PUCCH and PUSCH transmissions of different priorities on different cells under inter-band carrier aggregation, the terminal transmits PUCCH#1, PUCCH#2, and PUSCH#1 simultaneously and separately, or the terminal multiplexes the UCI on PUCCH#1 or PUCCH#2 onto PUSCH#1 for transmission.

### Case 1-2-2: The priority index of PUCCH#1 is 0, the priority index of PUCCH#2 is 1, and the priority index of the PUSCH is 1

In this case, it specifically includes one of the following situations.
1. If the terminal is neither enabled for simultaneous PUCCH and PUSCH transmissions of different priorities on different cells under inter-band carrier aggregation, nor enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#1, and transmits PUCCH#2 and PUSCH#1 separately.
   Optionally, the terminal does not expect this scenario to occur.
2. If the terminal is enabled for simultaneous PUCCH and PUSCH transmissions of different priorities on different cells under inter-band carrier aggregation, the terminal transmits PUCCH#1, PUCCH#2, and PUSCH#1 simultaneously and separately.
3. If the terminal is also enabled for multiplexing between different priorities (including multiplexing between PUCCHs having different priorities or between a PUCCH and a PUSCH having different priorities), for example, the terminal is configured with uci-MuxWithDiffPrio and is not enabled for simultaneous PUCCH and PUSCH transmissions of different priorities on different cells under inter-band carrier aggregation, the terminal multiplexes the UCI on PUCCH#1 onto the PUSCH for transmission, and transmits PUCCH#2 and PUSCH#1 separately.
4. If the terminal is also enabled for multiplexing between different priorities (including multiplexing between PUCCHs having different priorities or between a PUCCH and a PUSCH having different priorities, for example, the terminal is configured with uci-MuxWithDiffPrio) and simultaneous PUCCH and PUSCH transmissions of different priorities on different cells under inter-band carrier aggregation, the terminal transmits PUCCH#1, PUCCH#2, and PUSCH#1 simultaneously and separately, or the terminal multiplexes the UCI on PUCCH#1 or PUCCH#2 onto PUSCH#1 for transmission.

### Case 1-2-3: The priority index of PUCCH#1 is 1, the priority index of PUCCH#2 is 0, and the priority index of PUSCH#1 is 0

In this case, it specifically includes one of the following situations.
1. If the terminal is neither enabled for simultaneous PUCCH and PUSCH transmissions of different priorities on different cells under inter-band carrier aggregation, nor enabled for multiplexing between different priorities (including multiplexing between PUCCHs having different priorities or between a PUCCH and a PUSCH having different priorities, for example, the terminal is not configured with uci-MuxWithDiffPrio), the terminal drops PUSCH#1, and transmits PUCCH#1 and PUCCH#2 separately.
   Optionally, the terminal does not expect this scenario to occur.
2. If the terminal is enabled for simultaneous PUCCH and PUSCH transmissions of different priorities on different cells under inter-band carrier aggregation, the terminal transmits PUCCH#1, PUCCH#2, and PUSCH#1 simultaneously and separately.
3. If the terminal is also enabled for multiplexing between different priorities (including multiplexing between a PUCCH and a PUSCH having different priorities), for example, the terminal is configured with uci-MuxWithDiffPrio, and the terminal is not enabled for simultaneous PUCCH and PUSCH transmissions of different priorities on different cells under inter-band carrier aggregation, the terminal multiplexes the UCI on PUCCH#1 onto PUSCH#1 for transmission, and cancels the transmission of PUCCH#2.
   Optionally, the terminal does not expect this scenario to occur.
4. If the terminal is also enabled for multiplexing between different priorities (including multiplexing between PUCCHs having different priorities or between a PUCCH and a PUSCH having different priorities, for example, the terminal is configured with uci-MuxWithDiffPrio) and simultaneous PUCCH and PUSCH transmissions of different priorities on different cells under inter-band carrier aggregation, the terminal transmits PUCCH#1, PUCCH#2, and PUSCH#1 simultaneously and separately, or the terminal multiplexes the UCI on PUCCH#1 or PUCCH#2 onto PUSCH#1 for transmission.

### Case 1-2-4: The priority index of PUCCH#1 is 1, the priority index of PUCCH#2 is 0, and the priority index of PUSCH#1 is 1

In this case, it specifically includes one of the following situations.
1. If the terminal is neither enabled for simultaneous PUCCH and PUSCH transmissions of different priorities on different cells under inter-band carrier aggregation, nor enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#2, and transmits PUCCH#1 and PUSCH#1 separately.
   Optionally, the terminal does not expect this scenario to occur.
2. If the terminal is also enabled for simultaneous PUCCH and PUSCH transmissions of different priorities on different cells under inter-band carrier aggregation, the terminal transmits PUCCH#2 and PUSCH#1 simultaneously and separately.
3. If the terminal is also enabled for multiplexing between different priorities (including multiplexing between PUCCHs having different priorities or between PUCCH and a PUSCH having different priorities), for example, the terminal is configured with uci-MuxWithDiffPrio, and the terminal is not enabled for simultaneous PUCCH and PUSCH transmissions of different priorities on different cells under inter-band carrier aggregation, the terminal multiplexes the UCI on PUCCH#2 onto PUSCH#1 for transmission, and transmits PUCCH#1 and PUSCH#1 separately.
4. If the terminal is also enabled for multiplexing between different priorities (including multiplexing between PUCCHs having different priorities or between a PUCCH and a PUSCH having different priorities, for example, the terminal is not configured with uci-MuxWithDiffPrio) and simultaneous PUCCH and PUSCH transmissions of different priorities on different cells under inter-band carrier aggregation, the terminal transmits PUCCH#1, PUCCH#2, and PUSCH#1 simultaneously and separately, or the terminal multiplexes the UCI on PUCCH#1 or PUCCH#2 onto PUSCH#1 for transmission.

In summary, if the terminal is simultaneously enabled for simultaneous PUCCH and PUSCH transmissions of same priority and different priorities on different cells under inter-band carrier aggregation (regardless of whether the terminal is enabled for multiplexing between different priorities), in Application case 1, the terminal transmits the PUCCH and the PUSCH separately.

Application case 2: One PUSCH overlaps, in time-domain resources, with three PUCCHs carrying the same UCI type (such as HARQ-ACK) in different slots, where two PUCCHs are in one slot and their priority indexes are different.

Case 2-1: The priority index of PUCCH#1 is 1, and the priority index of PUSCH#1 is 0, as shown in FIG. 5 and Table 2.

**Table 2 Transmission positions and priority mapping of PUCCH and PUSCH in Case 2-1**

| | | |
|---|---|---|
| PCell (TDD, 30 kHz) | PUCCH#1 | PUCCH#2 |
| | p=1 | p=0 |
| | | PUCCH#3 |
| | | p=1 |
| SCell #2 (FDD, 15 kHz) | PUSCH#1 | |
| | p=0 | |

In this case, it specifically includes one of the following situations.
1. If the terminal is neither enabled for simultaneous PUCCH and PUSCH transmissions of different priorities on different cells under inter-band carrier aggregation, nor enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#2 and PUSCH#1, and transmits PUCCH#1 and PUCCH#3 separately.
   Or, optionally, the terminal does not expect this scenario to occur.
2. If the terminal is also enabled for simultaneous PUCCH and PUSCH transmissions of different priorities on different cells under inter-band carrier aggregation, and is not enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#2, and transmits PUCCH#1, PUCCH#3, and PUSCH#1 simultaneously and separately.
   Or, optionally, the terminal does not expect this scenario to occur.
3. If the terminal is also enabled for multiplexing between different priorities (including multiplexing between PUCCHs having different priorities or between a PUCCH and a PUSCH having different priorities, for example, the terminal is configured with uci-MuxWithDiffPrio), and is not enabled for simultaneous PUCCH and PUSCH transmissions of different priorities on different cells under inter-band carrier aggregation, the terminal first multiplexes the UCI on PUCCH#2 and PUCCH#3 onto one PUCCH, assuming the multiplexed PUCCH is PUCCH#R. If PUCCH#R (its priority index is 1) overlaps with PUSCH#1, the terminal multiplexes the UCI carried on PUCCH#R and/or PUCCH#1 onto PUSCH#1 for transmission.
   Optionally, the terminal does not expect this scenario to occur, or the terminal does not expect PUCCH#R to overlap with PUSCH#1.
4. If the terminal is also enabled for multiplexing between different priorities (including multiplexing between PUCCHs having different priorities or between a PUCCH and a PUSCH having different priorities, for example, the terminal is configured with uci-MuxWithDiffPrio) and simultaneous PUCCH and PUSCH transmissions of different priorities on different cells under inter-band carrier aggregation, the terminal multiplexes PUCCH#2 and PUCCH#3, assuming the multiplexed PUCCH is PUCCH#R (high priority), and the terminal transmits PUCCH#1, PUCCH#R, and PUSCH#1 separately.

Case 2-2: The priority index of PUCCH#1 is 0, and the priority index of the PUSCH#1 is 1, as shown in Table 3:

**Table 3 Transmission positions and priority mapping of PUCCH and PUSCH in Case 2-2**

| | | |
|---|---|---|
| PCell (TDD, 30 kHz) | PUCCH#1 | PUCCH#2 |
| | p=0 | p=0 |
| | | PUCCH#3 |
| | | p=1 |
| SCell #2 (FDD, 15 kHz) | PUSCH#1 | |
| | p=1 | |

In this case, it specifically includes one of the following situations.
1. If the terminal is neither enabled for simultaneous PUCCH and PUSCH transmissions of different priorities on different cells under inter-band carrier aggregation, nor enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#1 and PUCCH#2, and transmits PUCCH#3 and PUSCH#1 separately;
   Or, optionally, the terminal does not expect this scenario to occur.
2. If the terminal is also enabled for simultaneous PUCCH and PUSCH transmissions of different priorities on different cells under inter-band carrier aggregation, and is not enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#2, and transmits PUCCH#1, PUCCH#3, and PUSCH#1 simultaneously and separately.
   Or, optionally, the terminal does not expect this scenario to occur.
3. If the terminal is also enabled for multiplexing between different priorities (including multiplexing between PUCCHs having different priorities or between a PUCCH and a PUSCH having different priorities, for example, the terminal is configured with uci-MuxWithDiffPrio), and the terminal is not enabled for simultaneous PUCCH and PUSCH transmissions of different priorities on different cells under inter-band carrier aggregation, the terminal first multiplexes the UCI on PUCCH#2 and PUCCH#3 onto one PUCCH, assuming the multiplexed PUCCH is PUCCH#R, where optionally, PUCCH#R (its priority index is 1) may overlap with PUSCH#1, the terminal multiplexes the UCI carried on PUCCH#1 onto PUSCH#1, and transmits PUCCH#R and PUSCH#1 separately;
   Optionally, the terminal does not expect this scenario to occur.
4. If the terminal is also enabled for multiplexing between different priorities (including multiplexing between PUCCHs having different priorities or between a PUCCH and a PUSCH having different priorities, for example, the terminal is configured with uci-MuxWithDiffPrio) and simultaneous PUCCH and PUSCH transmissions of different priorities on different cells under inter-band carrier aggregation, the terminal multiplexes PUCCH#2 and PUCCH#3, assuming the multiplexed PUCCH is PUCCH#R (high priority), optionally, PUCCH#R may overlap with PUSCH#1, and the terminal transmits PUCCH#1, PUCCH#R, and PUSCH#1 separately.

Case 2-3: The priority index of PUCCH#1 is 1, and the priority index of the PUSCH is 0, as shown in Table 4:

**Table 4 Transmission positions and priority mapping of PUCCH and PUSCH in Case 2-3**

| | | |
|---|---|---|
| PCell (TDD, 30 kHz) | PUCCH#1 | PUCCH#2 |
| | p=1 | p=0 |
| | | PUCCH#3 |
| | | p=1 |
| SCell #2 (FDD, 15 kHz) | PUSCH#1 | |
| | p=0 | |

In this case, it specifically includes one of the following situations.
1. If the terminal is neither enabled for simultaneous PUCCH and PUSCH transmissions of different priorities on different cells under inter-band carrier aggregation, nor enabled for multiplexing between different priorities ((including multiplexing between PUCCHs having different priorities or between a PUCCH and a PUSCH having different priorities, for example, the terminal is not configured with uci-MuxWithDiffPrio), the terminal drops PUCCH#2 and PUSCH#1, and transmits PUCCH#1 and PUCCH#3 separately;
   Or, optionally, the terminal does not expect this scenario to occur.
2. If the terminal is also enabled for simultaneous PUCCH and PUSCH transmissions of different priorities on different cells under inter-band carrier aggregation, and is not enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#2, and transmits PUCCH#1, PUCCH#3, and PUSCH#1 simultaneously and separately.
   Or, optionally, the terminal does not expect this scenario to occur.
3. If the terminal is also enabled for multiplexing between different priorities (including multiplexing between PUCCHs having different priorities or between a PUCCH and a PUSCH having different priorities), for example, the terminal is configured with uci-MuxWithDiffPrio, and the terminal is not enabled for simultaneous PUCCH and PUSCH transmissions of different priorities on different cells under inter-band carrier aggregation, the terminal first multiplexes the UCI on PUCCH#2 and PUCCH#3 onto one PUCCH, assuming the multiplexed PUCCH is PUCCH#R. If PUCCH#R (its priority index is 1) overlaps with PUSCH#1, the terminal multiplexes the UCI carried on PUCCH#R onto PUSCH#1 for transmission, and drops PUCCH#1. Or, if the multiplexed PUCCH#R does not overlap with PUSCH#1, the UE multiplexes the UCI carried on PUCCH#1 onto PUSCH#1, and transmits PUCCH#R and PUSCH#1 separately.
   Optionally, the terminal does not expect this scenario to occur.
4. If the terminal is also enabled for multiplexing between different priorities (including multiplexing between PUCCHs having different priorities or between a PUCCH and a PUSCH having different priorities, for example, the terminal is configured with uci-MuxWithDiffPrio), and simultaneous PUCCH and PUSCH transmissions of different priorities on different cells under inter-band carrier aggregation, the terminal multiplexes PUCCH#2 and PUCCH#3, assuming the multiplexed PUCCH is PUCCH#R (high priority), where if PUCCH#R may be transmitted simultaneously with PUSCH (inter-band, different cells (for example, component carriers (CC)), the terminal transmits PUCCH#1, PUCCH#R, and PUSCH#1 separately (where PUCCH#R may overlap with PUSCH#1).

Case 2-4: The priority index of PUCCH#1 is 1, and the priority index of PUSCH#1 is 1, as shown in Table 5:

**Table 5 Transmission positions and priority mapping of PUCCH and PUSCH in Case 2-4**

| | | |
|---|---|---|
| PCell (TDD, 30 kHz) | PUCCH#1 | PUCCH#2 |
| | p=1 | p=0 |
| | | PUCCH#3 |
| | | p=1 |
| SCell #2 (FDD, 15 kHz) | PUSCH#1 | |
| | p=1 | |

In this case, it specifically includes one of the following situations.
1. If the terminal is neither enabled for simultaneous PUCCH and PUSCH transmissions of different priorities on different cells under inter-band carrier aggregation, nor enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#2, and transmits PUCCH#1, PUCCH#3, and PUSCH#1 separately
   Optionally, the terminal does not expect this scenario to occur.
2. If the terminal is also enabled for simultaneous PUCCH and PUSCH transmissions of different priorities on different cells under inter-band carrier aggregation, and is not enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#2, and transmits PUCCH#1, PUCCH#3, and PUSCH#1 simultaneously and separately.
   Optionally, the terminal does not expect this scenario to occur.
3. If the terminal is also enabled for multiplexing between different priorities (including multiplexing between PUCCHs having different priorities or between a PUCCH and a PUSCH having different priorities, for example, the terminal is configured with uci-MuxWithDiffPrio), and the terminal is not enabled for simultaneous PUCCH and PUSCH transmissions of different priorities on different cells under inter-band carrier aggregation, the terminal first multiplexes the UCI on PUCCH#2 and PUCCH#3 onto one PUCCH, assuming the multiplexed PUCCH is PUCCH#R (where optionally, if PUCCH#R (its priority index is 1) may be transmitted simultaneously with PUSCH (inter-band, different CCs), PUCCH#R may overlap with PUSCH#1), the terminal transmits PUCCH#1, PUCCH#R, and PUSCH#1 separately.
   Optionally, the terminal does not expect this scenario to occur.
4. If the terminal is also enabled for multiplexing between different priorities (including multiplexing between PUCCHs having different priorities or between a PUCCH and a PUSCH having different priorities, for example, the terminal is configured with uci-MuxWithDiffPrio) and simultaneous PUCCH and PUSCH transmissions of different priorities on different cells under inter-band carrier aggregation, the terminal multiplexes PUCCH#2 and PUCCH#3, assuming the multiplexed PUCCH is PUCCH#R (high priority), where optionally, if PUCCH#R may be transmitted simultaneously with the PUSCH (inter-band, different CCs), it may overlap with PUSCH#1; the terminal transmits PUCCH#1, PUCCH#R, and PUSCH#1 separately.
Application case 3: The terminal schedules/configures PUSCH transmissions on two different SCells, and the overlapping channel contains two PUSCHs and three PUCCHs

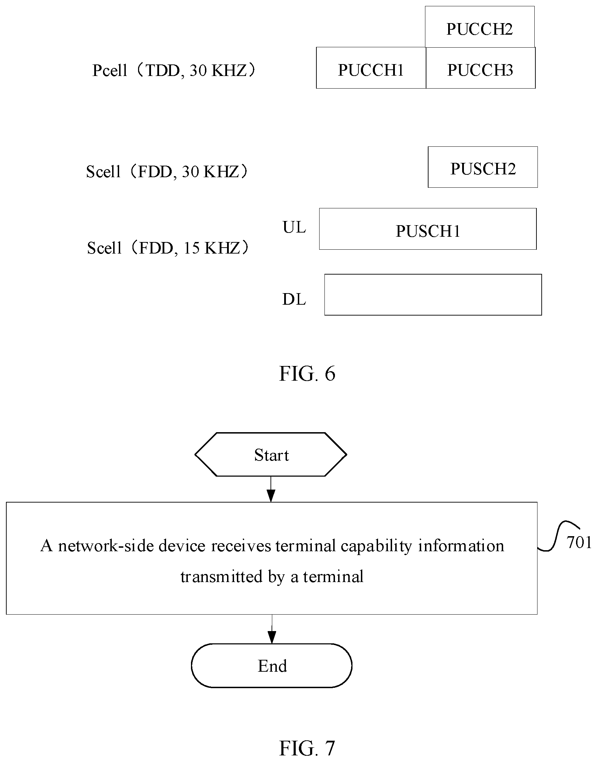

Case 3-1: The priority indexes of PUSCH#1 and PUSCH#2 are both 0, specifically as shown in FIG. 6 and Table 6:

**Table 6 Transmission positions and priority mapping of PUCCH and PUSCH in Case 3-1**

| | | |
|---|---|---|
| PCell (TDD, 30 kHz) | PUCCH#1 | PUCCH#2 |
| | p=0 | p=0 |
| | | PUCCH#3 |
| | | p=1 |
| SCell #1 (TDD, 30 kHz) | | PUSCH#2 |
| | | p=0 |
| SCell #2 (FDD, 15 kHz) | PUSCH#1 | |
| | p=0 | |

In this case, it specifically includes one of the following situations.
1. If the terminal is neither enabled for simultaneous PUCCH and PUSCH transmissions of different priorities on different cells under inter-band carrier aggregation, nor enabled for multiplexing between different priorities including multiplexing between PUCCHs having different priorities or between a PUCCH and a PUSCH having different priorities, for example, the terminal is not configured with uci-MuxWithDiffPrio), the terminal drops PUCCH#2, PUSCH#1, and PUSCH#2, and transmits PUCCH#1 and PUCCH#3 separately;
   Optionally, the terminal does not expect this scenario.
2. If the terminal is also enabled for simultaneous PUCCH and PUSCH transmissions of different priorities on different cells under inter-band carrier aggregation, and is not enabled for multiplexing between different priorities, (including multiplexing between PUCCHs having different priorities or between a PUCCH and a PUSCH having different priorities, for example, the terminal is not configured with uci-MuxWithDiffPrio), the terminal drops PUCCH#2, and transmits PUCCH#1, PUCCH#3, PUSCH#1, and PUSCH#2 simultaneously and separately; or, the terminal multiplexes the UCI carried by PUCCH#2 onto one of PUSCH#1 and PUSCH#2, for example, onto PUSCH#2, and transmits PUCCH#1, PUCCH#3, PUSCH#1, and PUSCH#2 separately.
3. If the terminal is also enabled for multiplexing between different priorities (including multiplexing between a PUCCH and a PUSCH having different priorities), for example, the terminal is configured with uci-MuxWithDiffPrio, and the terminal is not enabled for simultaneous PUCCH and PUSCH transmissions of different priorities on different cells under inter-band carrier aggregation, the terminal first multiplexes the UCI on PUCCH#2 and PUCCH#3 onto one PUCCH, assuming the multiplexed PUCCH is PUCCH#R. If PUCCH#R (its priority index is 1) overlaps with PUSCH#1 and/or PUSCH#2, the terminal multiplexes the UCI carried on PUCCH#R onto PUSCH#1 or PUSCH#2, for example, multiplexed onto PUSCH#2, the terminal cancels the transmission of PUCCH#1, and transmits PUSCH#1 and PUSCH#2 separately, or the terminal transmits PUCCH#1, PUSCH#1, and PUSCH#2 separately.
   Optionally, the terminal does not expect this scenario.
4. If the terminal is also enabled for multiplexing between different priorities (including multiplexing between PUCCHs having different priorities or between a PUCCH and a PUSCH having different priorities, for example, the terminal is configured with uci-MuxWithDiffPrio) and simultaneous PUCCH and PUSCH transmissions of different priorities on different cells under inter-band carrier aggregation, the terminal multiplexes PUCCH#2 and PUCCH#3, assuming the multiplexed PUCCH is PUCCH#R (high priority), where PUCCH#R may be transmitted simultaneously with PUSCH#1 and PUSCH#2 (that is, satisfying the requirements that the PUCCH and the PUSCH are located in inter-band serving cells on different CCs), PUCCH#R may overlap with PUSCH#1, and the terminal transmits PUCCH#1, PUCCH#R, PUSCH#1, and PUSCH#2 separately.

Case 3-2: The priority indexes of PUSCH#1 and PUSCH#2 are both 1, specifically as shown in Table 7:

**Table 7 Transmission positions and priority mapping of PUCCH and PUSCH in Case 3-2**

| | | |
|---|---|---|
| PCell (TDD, 30 kHz) | PUCCH#1 | PUCCH#2 |
| | p=0 | p=0 |
| | | PUCCH#3 |
| | | p=1 |
| SCell #1 (TDD, 30 kHz) | | PUSCH#2 |
| | | p=1 |
| SCell #2 (FDD, 15 kHz) | PUSCH#1 | |
| | p=1 | |

In this case, it specifically includes one of the following situations.
1. If the terminal is neither enabled for simultaneous PUCCH and PUSCH transmissions of different priorities on different cells under inter-band carrier aggregation, nor enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#1 and PUCCH#2, and transmits PUCCH#3, PUSCH#1, and PUSCH#2 separately.
   Or, optionally, the terminal does not expect this scenario.
2. If the terminal is also enabled for simultaneous PUCCH and PUSCH transmissions of different priorities on different cells under inter-band carrier aggregation, and is not enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#2, and transmits PUCCH#1, PUCCH#3, PUSCH#1, and PUSCH#2 simultaneously and separately; or, the terminal multiplexes the UCI carried by PUCCH#2 onto one of PUSCH#1 and PUSCH#2, for example, onto PUSCH#2, and transmits PUCCH#1, PUCCH#3, PUSCH#1, and PUSCH#2 separately; or, the terminal multiplexes the UCI carried by PUCCH#3 to one of PUSCH#1 and PUSCH#2, for example, onto PUSCH#2, and transmits PUCCH#1, PUCCH#2, PUSCH#1, and PUSCH#2 separately.
   Or, optionally, the terminal does not expect this scenario.
3. If the terminal is also enabled for multiplexing between different priorities (including multiplexing between a PUCCH and a PUSCH having different priorities), for example, the terminal is configured with uci-MuxWithDiffPrio, and the terminal is not enabled for simultaneous PUCCH and PUSCH transmissions of different priorities on different cells under inter-band carrier aggregation, the terminal first multiplexes the UCI on PUCCH#2 and PUCCH#3 onto one PUCCH, assuming the multiplexed PUCCH is PUCCH#R, where PUCCH#R (its priority index is 1) may overlap or not overlap with PUSCH#1 or PUSCH#2, and transmits PUCCH#1, PUCCH#R, PUSCH#1, and PUSCH#2 separately
4. If the terminal is also enabled for multiplexing between different priorities including multiplexing between PUCCHs having different priorities or between a PUCCH and a PUSCH having different priorities, for example, the terminal is configured with uci-MuxWithDiffPrio) and simultaneous PUCCH and PUSCH transmissions of different priorities on different cells under inter-band carrier aggregation, the terminal multiplexes PUCCH#2 and PUCCH#3, assuming the multiplexed PUCCH is PUCCH#R (high priority), where PUCCH#R may be transmitted simultaneously with PUSCH (that is, satisfying the requirements of inter-band and different cells (for example, CC)), optionally, PUCCH#R may overlap with PUSCH#1 and/or PUSCH#2, and the terminal transmits PUCCH#1, PUCCH#R, PUSCH#1, and PUSCH#2 separately.

Case 3-3: The priority index of PUSCH#1 is 1, and the priority index of PUSCH#2 is 0, specifically as shown in Table 8:

**Table 8 Transmission positions and priority mapping of PUCCH and PUSCH in Case 3-3**

| | | |
|---|---|---|
| PCell (TDD, 30 kHz) | PUCCH#1 | PUCCH#2 |
| | p=0 | p=0 |
| | | PUCCH#3 |
| | | p=1 |
| SCell #1 (TDD, 30 kHz) | | PUSCH#2 |
| | | p=0 |
| SCell #2 (FDD, 15 kHz) | PUSCH#1 | |
| | p=1 | |

In this case, it specifically includes one of the following situations.
1. If the terminal is neither enabled for simultaneous PUCCH and PUSCH transmissions of different priorities on different cells under inter-band carrier aggregation, nor enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#1, PUCCH#2, and PUSCH#1, and transmits PUCCH#3 and PUSCH#2 separately.
   Or, optionally, the terminal does not expect this scenario.
2. If the terminal is also enabled for simultaneous PUCCH and PUSCH transmissions of different priorities on different cells under inter-band carrier aggregation, and is not enabled for multiplexing between different priorities (including multiplexing between PUCCHs having different priorities or between a PUCCH and a PUSCH having different priorities, for example, the terminal is not configured with uci-MuxWithDiffPrio), the terminal drops PUCCH#2, and transmits the above PUCCH#1, PUCCH#3, PUSCH#1, and PUSCH#2 simultaneously and separately; or, the terminal multiplexes the UCI carried by PUCCH#2 onto one of PUSCH#1 and PUSCH#2, for example, onto PUSCH#2, and transmits PUCCH#1, PUCCH#3, PUSCH#1, and PUSCH#2 separately; or, the terminal multiplexes the UCI carried by PUCCH#3 onto one of PUSCH#1 and PUSCH#2, for example, onto PUSCH#2, and transmits PUCCH#1, PUCCH#2, PUSCH#1, and PUSCH#2 separately.
   Or, optionally, the terminal does not expect this scenario.
3. If the terminal is also enabled for multiplexing between different priorities (including multiplexing between a PUCCH and a PUSCH having different priorities), for example, the terminal is configured with uci-MuxWithDiffPrio, and the terminal is not enabled for simultaneous PUCCH and PUSCH transmissions of different priorities on different cells under inter-band carrier aggregation, the terminal first multiplexes the UCI on PUCCH#2 and PUCCH#3 onto one PUCCH, assuming the multiplexed PUCCH is PUCCH#R, where PUCCH#R (its priority index is 1) may overlap with PUSCH#1. If PUCCH#R overlaps with PUSCH 1, the UCI carried by PUCCH#R is multiplexed onto PUSCH#1, and PUCCH#1, PUSCH#1, and PUSCH#2 are transmitted separately. If PUCCH#R does not overlap with PUSCH#1, PUCCH#1, PUCCH#R, PUSCH#1, and PUSCH#2 are transmitted separately.
4. If the terminal is also enabled for multiplexing between different priorities (including multiplexing between PUCCHs having different priorities or between a PUCCH and a PUSCH having different priorities, for example, the terminal is configured with uci-MuxWithDiffPrio) and simultaneous PUCCH and PUSCH transmissions of different priorities on different cells under inter-band carrier aggregation, the terminal multiplexes PUCCH#2 and PUCCH#3, assuming the multiplexed PUCCH is PUCCH#R (high priority), where PUCCH#R may be transmitted simultaneously with PUSCH (that is, satisfying the requirements of inter-band and different cells (for example, CC)), optionally, PUCCH#R may overlap with PUSCH#1 and/or PUSCH#2, and the terminal transmits PUCCH#1, PUCCH#R, PUSCH#1, and PUSCH#2 separately.

It should be noted that the premise of the embodiments of the present application is that the Pcell and the Scell are already in different bands, satisfying the inter-band requirement for simultaneous transmission.

It should be noted that the embodiments of the present application provide a terminal capability reporting method and an overlap resolving method, so as to alleviate some existing scheduling restrictions to improve the flexibility and throughput of the system.

As shown in FIG. 7, embodiments of the present application provide an information transmission method, including:
Step 701: A network-side device receives terminal capability information transmitted by a terminal, where the terminal capability information is used to indicate whether the terminal supports physical uplink control channel PUCCH and physical uplink shared channel PUSCH transmissions of same priority on different cells under carrier aggregation.

Optionally, the PUCCH includes hybrid automatic repeat request acknowledgement (HARQ-ACK) information.

Optionally, the method further includes:
transmitting, by the network-side device, a first configuration parameter to the terminal; where
the first configuration parameter is used to enable the terminal to perform simultaneous PUCCH and PUSCH transmissions of same priority on different cells under carrier aggregation.

Optionally, the method further includes:
transmitting, by the network-side device, a second configuration parameter to the terminal; where
the second configuration parameter is used to enable the terminal to perform PUCCH and PUSCH transmissions of different priorities on different cells under inter-band carrier aggregation.

It should be noted that all descriptions about the network-side device in the above embodiments are applicable to the embodiments of the information transmission method applied to the network-side device side, with the same technical effects achieved, and details are not repeated herein.

The information transmission method provided in the embodiments of the present application may be executed by an information transmission apparatus. In the embodiments of the present application, the information transmission apparatus provided in the embodiments of the present application is described by using an example in which an information transmission apparatus performs the information transmission method.

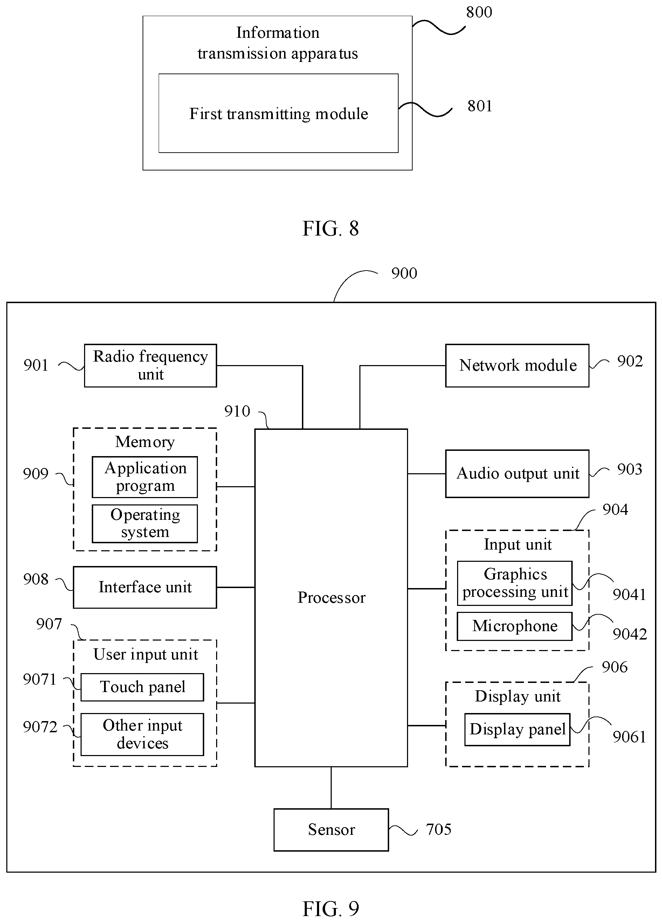

As shown in FIG. 8, an information transmission apparatus 800 according to embodiments of the present application, applied to a terminal, includes:
a first transmitting module 801 configured to transmit terminal capability information to a network-side device, where the terminal capability information is used to indicate whether the terminal supports simultaneous PUCCH and PUSCH transmissions of same priority on different cells under carrier aggregation.

Optionally, the PUCCH includes hybrid automatic repeat request acknowledgement (HARQ-ACK) information.

Optionally, the apparatus further includes:
a second receiving module configured to receive a first configuration parameter transmitted by the network-side device; where
the first configuration parameter is used to enable the terminal to perform simultaneous PUCCH and PUSCH transmissions of same priority on different cells under carrier aggregation.

Optionally, the apparatus further includes at least one of the following:
a first processing module configured to resolve overlap between PUCCHs having the same priority;
a second processing module configured to resolve overlap between a PUCCH and a PUSCH having the same priority;
a third processing module configured to resolve overlap between PUCCHs having different priorities; and
a fourth processing module configured to resolve overlap between a PUCCH and a PUSCH having different priorities.

Optionally, the apparatus further includes:
a first execution module configured to, in a case that a first PUCCH overlaps with at least one PUSCH, multiplex the first PUCCH with one or more PUSCHs in the at least one PUSCH; where
the first PUCCH and the at least one PUSCH have the same priority, and the at least one PUSCH is not capable of being transmitted simultaneously with the first PUCCH.

Optionally, the apparatus further includes:
a second execution module configured to, in a case that a second PUCCH overlaps with a plurality of PUSCHs, multiplex the second PUCCH with at least one PUSCH in a target PUSCH; where
the second PUCCH and the plurality of PUSCHs have the same priority; and the target PUSCH is a PUSCH in the plurality of PUSCHs that does not support simultaneous transmission with the second PUCCH, or the target PUSCH is a PUSCH in the plurality of PUSCHs excluding the PUSCH capable of being transmitted simultaneously with the second PUCCH.

Optionally, the apparatus further includes:
a first transmission module configured to, in a case that a third PUCCH overlaps with a first PUSCH, transmit the third PUCCH and the first PUSCH separately; where
the third PUCCH and the first PUSCH have the same priority, and the first PUSCH may be transmitted simultaneously with the third PUCCH.

Optionally, the apparatus further includes:
an acquisition module configured to, in a case that a fourth PUCCH overlaps with a fifth PUCCH, multiplex the fourth PUCCH and the fifth PUCCH to obtain a sixth PUCCH, where the fourth PUCCH and the fifth PUCCH have different priorities;
a second transmission module configured to, in a case that the sixth PUCCH overlaps with a second PUSCH, transmit, for the terminal, the sixth PUCCH and the second PUSCH separately, where the sixth PUCCH and the second PUSCH have the same priority; and the second PUSCH is capable of being transmitted simultaneously with the sixth PUCCH.

Optionally, the apparatus further includes:
a third receiving module configured to receive a second configuration parameter transmitted by the network-side device; where
the second configuration parameter is used to enable the terminal to perform simultaneous PUCCH and PUSCH transmissions of different priorities on different cells under carrier aggregation.

Optionally, the apparatus further includes:
a third transmission module configured to, in a case that a seventh PUCCH overlaps with a third PUSCH, transmit the seventh PUCCH and the third PUSCH separately; where
the seventh PUCCH and the third PUSCH have different priorities; and the third PUSCH is capable of being transmitted simultaneously with the seventh PUCCH.

Optionally, the terminal supports simultaneous PUCCH and PUSCH transmissions of different priorities on different cells under carrier aggregation.

It should be noted that this apparatus embodiment corresponds to the above method, and all implementation manners in the above method embodiments are applicable to this apparatus embodiment, with the same technical effects achieved, and details are not repeated herein.

The information transmission apparatus in the embodiments of the present application may be an electronic device, such as an electronic device with an operating system, or a component in an electronic device, such as an integrated circuit or a chip. The electronic device may be a terminal or other devices other than the terminal. By way of example, the terminal may include, but is not limited to, the types of the terminal 11 listed above, and other devices may be a server, a network attached storage (Network Attached Storage, NAS), or the like. This is not specifically limited in the embodiments of the present application.

Embodiments of the present application further provide a terminal, including a processor and a communication interface, where the communication interface is configured to transmit terminal capability information to a network-side device, and the terminal capability information is used to indicate whether the terminal supports simultaneous PUCCH and PUSCH transmissions of same priority on different cells under carrier aggregation.

Optionally, the PUCCH includes hybrid automatic repeat request acknowledgement (HARQ-ACK) information.

Optionally, the communication interface is further configured to:
receive a first configuration parameter transmitted by the network-side device; where
the first configuration parameter is used to enable the terminal to perform simultaneous PUCCH and PUSCH transmissions of same priority on different cells under carrier aggregation.

Optionally, the processor is further configured to implement at least one of the following:
resolving overlap between PUCCHs having the same priority;
resolving overlap between a PUCCH and a PUSCH having the same priority;
resolving overlap between PUCCHs having different priorities; and
resolving overlap between a PUCCH and a PUSCH having different priorities.

Optionally, the processor is configured to:
in a case that a first PUCCH overlaps with at least one PUSCH, multiplex the first PUCCH with one or more PUSCHs in the at least one PUSCH;
where the first PUCCH and the at least one PUSCH have the same priority; and the at least one PUSCH is not capable of being transmitted simultaneously with the first PUCCH.

Optionally, the processor is further configured to:
in a case that a second PUCCH overlaps with a plurality of PUSCHs, multiplex the second PUCCH with at least one PUSCH in a target PUSCH; where
the second PUCCH and the plurality of PUSCHs have the same priority; and the target PUSCH is a PUSCH in the plurality of PUSCHs that does not support simultaneous transmission with the second PUCCH, or the target PUSCH is a PUSCH in the plurality of PUSCHs excluding the PUSCH capable of being transmitted simultaneously with the second PUCCH.

Optionally, the communication interface is further configured to:
in a case that a third PUCCH overlaps with a first PUSCH, transmit the third PUCCH and the first PUSCH separately; where
the third PUCCH and the first PUSCH have the same priority; and the first PUSCH is capable of being transmitted simultaneously with the third PUCCH.

Optionally, the processor is further configured to:
in a case that a fourth PUCCH overlaps with a fifth PUCCH, multiplex the fourth PUCCH and the fifth PUCCH to obtain a sixth PUCCH, where the fourth PUCCH and the fifth PUCCH have different priorities;

The communication interface is configured to, in a case that the sixth PUCCH overlaps with a second PUSCH, transmit, by the terminal, the sixth PUCCH and the second PUSCH separately, where the sixth PUCCH and the second PUSCH have the same priority; and the second PUSCH is capable of being transmitted simultaneously with the sixth PUCCH.

Optionally, the communication interface is further configured to:
receive a second configuration parameter transmitted by the network-side device; where
the second configuration parameter is used to enable the terminal to perform simultaneous PUCCH and PUSCH transmissions of different priorities on different cells under carrier aggregation.

Optionally, the communication interface is further configured to:
in a case that a seventh PUCCH overlaps with a third PUSCH, transmit the seventh PUCCH and the third PUSCH separately; where
the seventh PUCCH and the third PUSCH have different priorities; and the third PUSCH is capable of being transmitted simultaneously with the seventh PUCCH.

Optionally, the terminal supports simultaneous PUCCH and PUSCH transmissions of different priorities on different cells under carrier aggregation.

Preferably, embodiments of the present application further provide a terminal, including a processor, a memory, and a program or an instruction stored in the memory and executable on the processor. When the program or instruction is executed by the processor, the various processes of the above information transmission method embodiments are implemented, with the same technical effects achieved. To avoid repetition, details are not described herein. Specifically, FIG. 9 is a schematic diagram of a hardware structure of a terminal implementing the embodiments of the present application.

The terminal 900 includes, but is not limited to at least some of the components such as a radio frequency unit 901, a network module 902, an audio output unit 903, an input unit 904, a sensor 905, a display unit 906, a user input unit 907, an interface unit 908, a memory 909, and a processor 910.

Those skilled in the art may understand that the terminal 900 may also include a power supply (such as a battery) for supplying power to various components, and the power supply may be logically connected to the processor 910 through a power management system. In this way, functions such as charge management, discharge management, and power consumption management are implemented by using the power management system. The terminal structure shown in FIG. 9 does not constitute a limitation to the terminal. The terminal may include more or fewer components than shown in the figure, or combine some components, or have different component arrangements. Details are not described herein.

It should be understood that in the embodiments of the present application, the input unit 904 may include a graphics processing unit (Graphics Processing Unit, GPU) 9041 and a microphone 9042, and the graphics processing unit 9041 processes image data of still pictures or videos obtained by an image capture apparatus (such as a camera) in a video capture mode or an image capture mode. The display unit 906 may include a display panel 9061, which may be configured in the form of a liquid crystal display, an organic light emitting diode, and the like. The user input unit 907 includes at least one of a touch panel 9071 and other input devices 9092. The touch panel 9071 is also referred to as a touch screen. The touch panel 9071 may include two parts: a touch detection apparatus and a touch controller. Other input devices 9072 may include, but are not limited to, a physical keyboard, a function key (for example, a volume control key or a power on/off key), a trackball, a mouse, and a joystick. Details are not described herein.

In the embodiments of the present application, the radio frequency unit 901 receives downlink data from an access network device and transmits the data to the processor 910 for processing; and the radio frequency unit 901 may additionally transmit uplink data to the network-side device. Generally, the radio frequency unit 901 includes, but is not limited, to an antenna, an amplifier, a transceiver, a coupler, a low noise amplifier, and a duplexer.

The memory 909 may be configured to store software programs or instructions and various data. The memory 909 may mainly include a first storage area storing programs or instructions and a second storage area storing data, where the first storage area may store an operating system, application programs or instructions required for at least one function (such as a sound playback function or an image playback function). In addition, the memory 909 may include volatile memory or non-volatile memory, or the memory 909 may include both volatile and non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 909 in the embodiments of the present application includes, but is not limited to, these and any other suitable types of memories.

The processor 910 may include one or more processing unit. Optionally, the processor 910 integrates an application processor and a modem processor, where the application processor mainly processes operations related to the operating system, user interface, and application programs, and the modem processor mainly processes wireless communication signals, such as a baseband processor. It may be understood that the above modem processor may alternatively not be integrated into the processor 910.

The interface unit 908 is configured to transmit terminal capability information to the network-side device, where the terminal capability information is used to indicate whether the terminal supports simultaneous PUCCH and PUSCH transmissions of same priority on different cells under carrier aggregation.

Optionally, the PUCCH includes hybrid automatic repeat request acknowledgement (HARQ-ACK) information.

Optionally, the interface unit 908 is further configured to:
receive a first configuration parameter transmitted by the network-side device; where
the first configuration parameter is used to enable the terminal to perform simultaneous PUCCH and PUSCH transmissions of same priority on different cells under carrier aggregation.

Optionally, the processor 910 is further configured to implement at least one of the following:
resolving overlap between PUCCHs having the same priority;
resolving overlap between a PUCCH and a PUSCH having the same priority;
resolving overlap between PUCCHs having different priorities; and
resolving overlap between a PUCCH and a PUSCH having different priorities.

Optionally, the processor 910 is configured to:
in a case that a first PUCCH overlaps with at least one PUSCH, multiplex the first PUCCH with one or more PUSCHs in the at least one PUSCH; where
the first PUCCH and the at least one PUSCH have the same priority; and the at least one PUSCH is not capable of being transmitted simultaneously with the first PUCCH.

Optionally, the processor 910 is further configured to:
in a case that a second PUCCH overlaps with a plurality of PUSCHs, multiplex the second PUCCH with at least one PUSCH in a target PUSCH; where
the second PUCCH and the plurality of PUSCHs have the same priority; and the target PUSCH is a PUSCH in the plurality of PUSCHs that does not support simultaneous transmission with the second PUCCH, or the target PUSCH is a PUSCH in the plurality of PUSCHs excluding the PUSCH capable of being transmitted simultaneously with the second PUCCH.

Optionally, the interface unit 908 is further configured to:
in a case that a third PUCCH overlaps with a first PUSCH, transmit the third PUCCH and the first PUSCH separately; where
the third PUCCH and the first PUSCH have the same priority; and the first PUSCH is capable of being transmitted simultaneously with the third PUCCH.

Optionally, the processor 910 is further configured to:
in a case that a fourth PUCCH overlaps with a fifth PUCCH, multiplex the fourth PUCCH and the fifth PUCCH to obtain a sixth PUCCH, where the fourth PUCCH and the fifth PUCCH have different priorities;

The interface unit 908 is configured to, in a case that the sixth PUCCH overlaps with a second PUSCH, transmit, by the terminal, the sixth PUCCH and the second PUSCH separately, where the sixth PUCCH and the second PUSCH have the same priority; and the second PUSCH is capable of being transmitted simultaneously with the sixth PUCCH.

Optionally, the interface unit 908 is further configured to:
receive a second configuration parameter transmitted by the network-side device; where
the second configuration parameter is used to enable the terminal to perform simultaneous PUCCH and PUSCH transmissions of different priorities on different cells under carrier aggregation.

Optionally, the interface unit 908 is further configured to:
in a case that a seventh PUCCH overlaps with a third PUSCH, transmit the seventh PUCCH and the third PUSCH separately; where
the seventh PUCCH and the third PUSCH have different priorities; and the third PUSCH is capable of being transmitted simultaneously with the seventh PUCCH.

Optionally, the terminal supports simultaneous PUCCH and PUSCH transmissions of different priorities on different cells under carrier aggregation.

Preferably, embodiments of the present application further provide a terminal, including a processor, a memory, and a program or an instruction stored in the memory and executable on the processor. When the program or instruction is executed by the processor, the various processes of the above information transmission method embodiments are implemented, with the same technical effects achieved. To avoid repetition, details are not described herein.

Embodiments of the present application further provide a readable storage medium. The computer readable storage medium stores a program or an instruction. When the program or instruction is executed by a processor, the various processes of the above information transmission method embodiments are implemented, with the same technical effects achieved. To avoid repetition, details are not described herein.

The computer-readable storage medium includes, for example, a read-only memory (Read-Only Memory, ROM for short), a random access memory (Random Access Memory, RAM for short), a magnetic disk, or an optical disc.

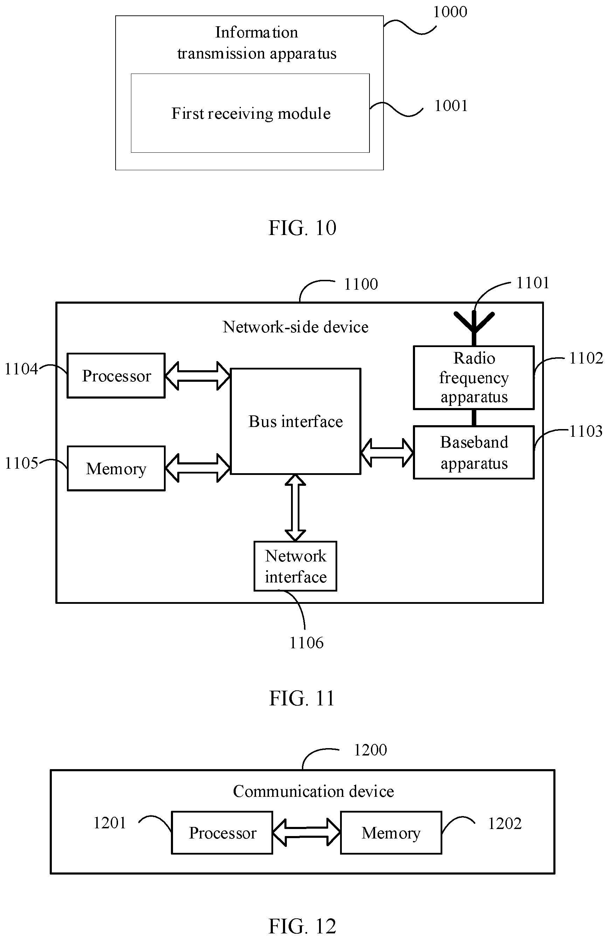

As shown in FIG. 10, an information transmission apparatus 1000 according to embodiments of the present application, applied to a network-side device, includes:
a first receiving module 1001 configured to receive terminal capability information transmitted by a terminal, where the terminal capability information is used to indicate whether the terminal supports physical uplink control channel PUCCH and physical uplink shared channel PUSCH transmissions of same priority on different cells under carrier aggregation.

Optionally, the PUCCH includes hybrid automatic repeat request acknowledgement (HARQ-ACK) information.

Optionally, the apparatus further includes:
a second transmitting module configured to transmit a first configuration parameter to the terminal; where
the first configuration parameter is used to enable the terminal to perform simultaneous PUCCH and PUSCH transmissions of same priority on different cells under carrier aggregation.

Optionally, the apparatus further includes:
a third transmitting module configured to transmit a second configuration parameter to the terminal; where
the second configuration parameter is used to enable the terminal to perform PUCCH and PUSCH transmissions of different priorities on different cells under carrier aggregation.

It should be noted that this apparatus embodiment corresponds to the above method, and all implementation manners in the above method embodiments are applicable to this apparatus embodiment, with the same technical effects achieved.

The communication processing apparatus provided in the embodiments of the present application may implement the various processes implemented in the method embodiments in FIG. 7, with the same technical effects achieved. To avoid repetition, details are not described herein.

Embodiments of the present application further provide a network-side device, including a processor and a communication interface. The communication interface is configured to receive terminal capability information transmitted by a terminal, where the terminal capability information is used to indicate whether the terminal supports physical uplink control channel PUCCH and physical uplink shared channel PUSCH transmissions of same priority on different cells under carrier aggregation.

Optionally, the PUCCH includes hybrid automatic repeat request acknowledgement (HARQ-ACK) information.

Optionally, the communication interface is further configured to:
transmit a first configuration parameter to the terminal; where
the first configuration parameter is used to enable the terminal to perform simultaneous PUCCH and PUSCH transmissions of same priority on different cells under carrier aggregation.

Optionally, the communication interface is further configured to:
transmit a second configuration parameter to the terminal; where
the second configuration parameter is used to enable the terminal to perform PUCCH and PUSCH transmissions of different priorities on different cells under carrier aggregation.

Specifically, embodiments of the present application further provide a network-side device. As shown in FIG. 11, the network-side device 1100 includes an antenna 1101, a radio frequency apparatus 1102, a baseband apparatus 1103, a processor 1104, and a memory 1105. The antenna 1101 is connected to the radio frequency apparatus 1102. In the uplink direction, the radio frequency apparatus 1102 receives information through the antenna 1101, and transmits the received information to the baseband apparatus 1103 for processing. In the downlink direction, the baseband apparatus 1103 processes the information to be transmitted and transmits the information to the radio frequency apparatus 1102, and the radio frequency apparatus 1102 processes the received information and transmits the information out through the antenna 1101.

The method executed by the network-side device in the above embodiments may be implemented in the baseband apparatus 1103, and the baseband apparatus 1103 includes a baseband processor.

The baseband apparatus 1103 may include at least one baseband board, on which a plurality of chips are provided. As shown in FIG. 11, one of the chips is, for example, a baseband processor, and connected to the memory 1105 through a bus interface, to call the program in the memory 1105 to perform the operations of the network device shown in the foregoing method embodiment.

The network-side device may further include a network interface 1106, where the interface is, for example, a common public radio interface (common public radio interface, CPRI).

Specifically, the network-side device 1100 in the embodiments of the present application further includes an instruction or program stored in the memory 1105 and executable on the processor 1104. The processor 1104 calls the instruction or program in the memory 1105 to perform the method performed by the various modules shown in FIG. 10, with the same technical effects achieved. To avoid repetition, details are not described herein.

Embodiments of the present application further provide a readable storage medium. The readable storage medium stores a program or an instruction. When the program or instruction is executed by a processor, the various processes of the above information transmission method embodiments are implemented, with the same technical effects achieved. To avoid repetition, details are not described herein.

The processor is the processor in the access network device described in the above embodiment. The readable storage medium may be non-volatile or non-transitory. The readable storage medium may include a computer-readable storage medium, such as a computer read-only memory ROM, a random access memory RAM, a magnetic disk, or an optical disc.

Optionally, as shown in FIG. 12, embodiments of the present application further provide a communication device 1200, including a processor 1201 and a memory 1202. The memory 1202 stores a program or an instruction executable on the processor 1201. For example, when the communication device 1200 is a terminal, and the program or instruction is executed by the processor 1201, the various steps of the above information transmission method embodiments are implemented, with the same technical effects achieved. When the communication device 1200 is a network-side device, and the program or instruction is executed by the processor 1201, the various steps of the above information transmission method embodiments are implemented, with the same technical effects achieved. To avoid repetition, details are not described herein.

Embodiments of the present application further provide a chip. The chip includes a processor and a communication interface. The communication interface is coupled to the processor. The processor is configured to run a program or instructions to implement each process of the embodiment of the information transmission method, with the same technical effects achieved. To avoid repetition, details are not described herein.

It should be understood that the chip mentioned in the embodiments of the present application may also be referred to as a system-level chip, system chip, chip system, system on chip, or the like.

Embodiments of the present application further provide a computer program/program product. The computer program/program product is stored in a storage medium, and the computer program/program product is executed by at least one processor to implement the various processes of the above information transmission method embodiments, with the same technical effects achieved. To avoid repetition, details are not described herein.

Embodiments of the present application further provide a communication system, including a terminal and a network-side device. The terminal may be configured to perform the steps of the above information transmission method, and the network-side device may be configured to perform the steps of the above information transmission processing method.

Embodiments of the present application further provide a communication system, including a terminal and a network-side device. The terminal may be configured to perform the steps of the above information transmission method, and the network-side device may be configured to perform the steps of the above information transmission method.

It should be noted that, in this article, the terms "include", "contain" or any other variants thereof are intended to cover non-exclusive inclusion, so that a process, method, article, or apparatus including a series of elements not only includes those elements, but also includes other elements not explicitly listed, or elements inherent to such process, method, article, or apparatus. Without further limitation, an element defined by the statement "including one ..." does not exclude the presence of additional identical elements in the process, method, article, or apparatus including the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the descriptions of the foregoing implementations, persons skilled in the art may clearly understand that the method in the foregoing embodiment may be implemented by a computer software product in addition to a necessary universal hardware platform or by hardware only. The computer software product is stored in a storage medium (such as a ROM, RAM, a magnetic disk, or an optical disc), and includes several instructions for instructing a terminal or a network-side device to perform the methods described in the embodiments of the present application.

The embodiments of the present application are described above with reference to the accompanying drawings, but the present application is not limited to the foregoing implementations, and the foregoing implementations are only illustrative and not restrictive. Under the enlightenment of the present application, persons of ordinary skill in the art may make many forms without departing from the purpose of the present application and the protection scope of the claims, all of which fall within the protection of the present application.

## Claims

1. An information transmission method, comprising:
transmitting, by a terminal, terminal capability information to a network-side device, wherein the terminal capability information is used to indicate whether the terminal supports simultaneous PUCCH and PUSCH transmissions of same priority on different cells under carrier aggregation.

2. The method according to claim 1, wherein the PUCCH comprises hybrid automatic repeat request acknowledgement HARQ-ACK information.

3. The method according to claim 1 or 2, further comprising:
receiving, by the terminal, a first configuration parameter transmitted by the network-side device; wherein
the first configuration parameter is used to enable the terminal to perform simultaneous PUCCH and PUSCH transmissions of same priority on different cells under carrier aggregation.

4. The method according to claim 3, further comprising at least one of the following:
resolving, by the terminal, overlap between PUCCHs having the same priority;
resolving, by the terminal, overlap between a PUCCH and a PUSCH having the same priority;
resolving, by the terminal, overlap between PUCCHs having different priorities; and
resolving, by the terminal, overlap between a PUCCH and a PUSCH having different priorities.

5. The method according to claim 3, further comprising:
in a case that a first PUCCH overlaps with at least one PUSCH, multiplexing, by the terminal, the first PUCCH with one or more PUSCHs in the at least one PUSCH; wherein
the first PUCCH and the at least one PUSCH have the same priority; and the at least one PUSCH is not capable of being transmitted simultaneously with the first PUCCH.

6. The method according to claim 3, further comprising:
in a case that a second PUCCH overlaps with a plurality of PUSCHs, multiplexing, by the terminal, the second PUCCH with at least one PUSCH in a target PUSCH; wherein
the second PUCCH and the plurality of PUSCHs have the same priority; and the target PUSCH is a PUSCH in the plurality of PUSCHs that does not support simultaneous transmission with the second PUCCH, or the target PUSCH is a PUSCH in the plurality of PUSCHs excluding the PUSCH capable of being transmitted simultaneously with the second PUCCH.

7. The method according to claim 3, further comprising:
in a case that a third PUCCH overlaps with a first PUSCH, transmitting, by the terminal, the third PUCCH and the first PUSCH separately; wherein
the third PUCCH and the first PUSCH have the same priority; and the first PUSCH is capable of being transmitted simultaneously with the third PUCCH.

8. The method according to claim 3, further comprising:
in a case that a fourth PUCCH overlaps with a fifth PUCCH, multiplexing, by the terminal, the fourth PUCCH and the fifth PUCCH to obtain a sixth PUCCH, wherein the fourth PUCCH and the fifth PUCCH have different priorities; and
in a case that the sixth PUCCH overlaps with a second PUSCH, transmitting, by the terminal, the sixth PUCCH and the second PUSCH separately, wherein the sixth PUCCH and the second PUSCH have the same priority; and the second PUSCH is capable of being transmitted simultaneously with the sixth PUCCH.

9. The method according to any one of claims 3 to 8, further comprising:
receiving, by the terminal, a second configuration parameter transmitted by the network-side device; wherein
the second configuration parameter is used to enable the terminal to perform simultaneous PUCCH and PUSCH transmissions of different priorities on different cells under carrier aggregation.

10. The method according to any one of claims 3 to 9, further comprising:
in a case that a seventh PUCCH overlaps with a third PUSCH, transmitting, by the terminal, the seventh PUCCH and the third PUSCH separately; wherein
the seventh PUCCH and the third PUSCH have different priorities; and the third PUSCH is capable of being transmitted simultaneously with the seventh PUCCH.

11. The method according to any one of claims 1 to 10, wherein the terminal supports simultaneous PUCCH and PUSCH transmissions of different priorities on different cells under carrier aggregation.

12. An information transmission method, comprising:
receiving, by a network-side device, terminal capability information transmitted by a terminal, wherein the terminal capability information is used to indicate whether the terminal supports physical uplink control channel PUCCH and physical uplink shared channel PUSCH transmissions of same priority on different cells under carrier aggregation.

13. The method according to claim 12, wherein the PUCCH comprises hybrid automatic repeat request acknowledgement HARQ-ACK information.

14. The method according to claim 12 or 13, further comprising:
transmitting, by the network-side device, a first configuration parameter to the terminal; wherein
the first configuration parameter is used to enable the terminal to perform simultaneous PUCCH and PUSCH transmissions of same priority on different cells under carrier aggregation.

15. The method according to claim 14, further comprising:
transmitting, by the network-side device, a second configuration parameter to the terminal; wherein
the second configuration parameter is used to enable the terminal to perform PUCCH and PUSCH transmissions of different priorities on different cells under carrier aggregation.

16. An information transmission apparatus, applied to a terminal, comprising:
a first transmitting module configured to transmit terminal capability information to a network-side device, wherein the terminal capability information is used to indicate whether the terminal supports simultaneous PUCCH and PUSCH transmissions of same priority on different cells under carrier aggregation.

17. A terminal, comprising a processor and a memory, wherein the memory stores a program or an instruction executable by the processor, and when the program or instruction is executed by the processor, the steps of the information transmission method according to any one of claims 1 to 11 are implemented.

18. An information transmission apparatus, applied to a network-side device, comprising:
a first receiving module configured to receive terminal capability information transmitted by a terminal, wherein the terminal capability information is used to indicate whether the terminal supports physical uplink control channel PUCCH and physical uplink shared channel PUSCH transmissions of same priority on different cells under carrier aggregation.

19. A network-side device, comprising a processor and a memory, wherein the memory stores a program or an instruction executable by the processor, and when the program or instruction is executed by the processor, the steps of the information transmission method according to any one of claims 12 to 15 are implemented.

20. A readable storage medium, wherein the readable storage medium stores a program or an instruction, and when the program or instruction is executed by a processor, the steps of the information transmission method according to any one of claims 1 to 11 or the steps of the information transmission method according to any one of claims 12 to 15 are implemented.

21. A chip, wherein the chip comprises a processor and a communication interface, the communication interface is coupled to the processor, and the processor is configured to run a program or an instruction to implement the steps of the information transmission method according to any one of claims 1 to 11, or to implement the steps of the information transmission method according to any one of claims 12 to 15.

22. A computer program product, wherein the program product is executed by at least one processor to implement the steps of the information transmission method according to any one of claims 1 to 11, or to implement the steps of the information transmission method according to any one of claims 12 to 15.

23. An information transmission apparatus/device, comprising the apparatus/device being configured to perform the steps of the information transmission method according to any one of claims 1 to 11, or the steps of the information transmission method according to any one of claims 12 to 15.
